(19) Europäisches Patentamt
European Patent Office
Office européen des brevets

(11) **EP 3 323 028 B1**

(12) **FASCICULE DE BREVET EUROPEEN**

(45) Date de publication et mention de la délivrance du brevet:
**22.04.2020 Bulletin 2020/17**

(21) Numéro de dépôt: **16739167.1**

(22) Date de dépôt: **15.07.2016**

(51) Int Cl.:
*G05D 1/10* *(2006.01)*   *G05D 1/06* *(2006.01)*
*B64D 45/04* *(2006.01)*   *G01P 3/38* *(2006.01)*
*G01S 3/14* *(2006.01)*   *G01S 11/10* *(2006.01)*
*G01S 13/86* *(2006.01)*   *G01S 13/91* *(2006.01)*

(86) Numéro de dépôt international:
**PCT/EP2016/066985**

(87) Numéro de publication internationale:
**WO 2017/009471 (19.01.2017 Gazette 2017/03)**

(54) **PROCÉDÉ D'ASSISTANCE AUTOMATIQUE À L'ATTERRISSAGE D'UN AÉRONEF**

VERFAHREN ZUR AUTOMATISCHEN UNTERSTÜTZUNG DER LANDUNG EINES FLUGZEUGES

METHOD FOR AUTOMATICALLY ASSISTING WITH THE LANDING OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.07.2015 FR 1501512**

(43) Date de publication de la demande:
**23.05.2018 Bulletin 2018/21**

(73) Titulaire: **Safran Electronics & Defense**
**92100 Boulogne-Billancourt (FR)**

(72) Inventeurs:
• **CHIODINI, Alain**
**92100 Boulogne-Billancourt (FR)**
• **DUFRESNE DE VIREL, François**
**92100 Boulogne-Billancourt (FR)**
• **POUILLARD, Sylvain**
**92100 Boulogne-Billancourt (FR)**

(74) Mandataire: **Regimbeau**
**20, rue de Chazelles**
**75847 Paris Cedex 17 (FR)**

(56) Documents cités:
**GB-A- 2 302 318    US-A- 4 454 510**
**US-A1- 2009 055 038**

**Description**

DOMAINE TECHNIQUE GENERAL

L'invention concerne le domaine du guidage d'aéronef.

Elle a plus particulièrement pour objet un procédé de guidage automatique d'un aéronef tel qu'un drone d'une position éloignée d'un aéroport jusqu'à l'atterrissage de l'aéronef sur une piste d'atterrissage.

ETAT DE LA TECHNIQUE

Les systèmes de guidage des drones existants permettent de réaliser un guidage autonome d'un drone le long d'une trajectoire prédéfinie, correspondant par exemple au trajet d'une mission d'observation. Pour réaliser un tel guidage, la position de l'aéronef est déterminée à intervalle régulier et comparée à la trajectoire à suivre. Cette position est généralement déterminée à l'aide d'un récepteur d'un système de positionnement absolu par satellite, tel que les systèmes GPS ou Galileo, dits systèmes GNSS (« Global Navigation Satellite System »).

Il peut néanmoins arriver que le calculateur de l'aéronef soit incapable de déterminer la position courante de l'aéronef, soit du fait d'une panne d'un composant de l'aéronef, tel qu'un récepteur GNSS, soit du fait d'une indisponibilité du signal du système de positionnement, par exemple en cas de brouillage de celui-ci. Sans connaitre la position de l'aéronef, le calculateur de celui-ci est alors incapable de guider l'aéronef pour lui faire suivre la trajectoire prédéterminée. Le système de guidage de l'aéronef est alors notamment incapable de faire parvenir celui-ci à son point d'atterrissage prévu tel qu'une piste d'un aéroport ou d'un aérodrome provisoire. L'aéronef risque alors de s'écraser à une position inconnue et d'être perdu.

Il existe donc un besoin d'un procédé de guidage permettant de guider de façon sûre un aéronef, de manière autonome, depuis un point de retour éloigné jusqu'à une piste d'atterrissage et de faire atterrir l'aéronef sur celle-ci, malgré une indisponibilité du positionnement par satellite, tout en minimisant la charge de travail de l'opérateur du drone, voire sans intervention de celui-ci.

Le document US 4 454 510 décrit un procédé d'assistance automatique à l'atterrissage d'un aéronef sur une piste d'atterrissage depuis un point donné, pour lequel la distance et l'altitude de l'aéronef sont déterminés, jusqu'à un point d'aboutissement. Le procédé est configuré pour être relié à un altimètre et à un écartomètre configuré pour mesurer un écart d'azimut de l'aéronef par rapport à la direction du nord magnétique ainsi déterminée. Il comprend en outre une phase d'assistance à l'atterrissage. Il est donc nécessaire dans ce procédé de géo-localiser l'aéronef et d'en déterminer l'altitude en établissant, dans une étape préalable, la position du nord magnétique et celle de la piste d'atterrissage, ce qui est complexe et nécessite la calibration du système d'assistance.

Le document US 2009/055038 quant à lui propose un procédé similaire en utilisant comme axe de référence pour la mesure d'écart d'azimut la direction de la piste d'atterrissage. Ici encore, le procédé nécessite donc la géolocalisation de l'aéronef et la détermination de son altitude ainsi qu'une étape de calibration du système d'assistance.

Enfin, le document GB 2 302 318 décrit un procédé de guidage à l'atterrissage d'un drone comprenant la détermination du positionnement de l'aéronef au niveau de marquages prédéterminés et le guidage de l'aéronef d'un point donné jusqu'à un point d'accroche à partir de données d'altitude calculées par un système d'analyse d'image et de données de cap de l'aéronef.

PRESENTATION DE L'INVENTION

La présente invention se rapporte selon un premier aspect à un procédé d'assistance automatique à l'atterrissage d'un aéronef sur une piste d'atterrissage depuis un point de retour jusqu'à un point d'aboutissement au niveau duquel l'aéronef entre en contact avec la piste d'atterrissage, ledit procédé étant mis en oeuvre par un dispositif de traitement de données embarqué sur ledit aéronef et configuré pour être relié à :

- un altimètre configuré pour mesurer l'altitude de l'aéronef,
- un écartomètre positionné au niveau d'une station au sol et configuré pour mesurer par rapport à un point de référence un écart d'azimut de l'aéronef par rapport à une direction de référence reliant ledit point de retour et la position de l'écartomètre,

ledit procédé étant caractérisé en ce qu'il comprend :

- une phase d'assistance à la navigation retour comprenant :

  - un guidage de l'aéronef, à partir de mesures d'écart d'azimut de l'aéronef par rapport à ladite direction de référence transmises par l'écartomètre, du point de retour en direction de la position de l'écartomètre;

- une détermination du positionnement de l'aéronef à un point de capture prédéterminé approximativement aligné avec le point de retour et la position de l'écartomètre;

- un guidage de l'aéronef le long d'une trajectoire prédéfinie du point de capture jusqu'à un point d'accroche prédéterminé approximativement aligné avec l'axe de la piste d'atterrissage à partir de données d'altitude fournies par l'altimètre et de données de cap et de vitesse de l'aéronef;

- une phase d'assistance à l'atterrissage comprenant un guidage du point d'accroche au point d'aboutissement situé sur la piste d'atterrissage.

Par point de retour, on comprendra ici le point à partir duquel l'aéronef est détecté par le système d'assistance à l'atterrissage. On notera que, dans l'invention, ce point de retour est défini sans que sa position (altitude, distance, etc.) ne soit connue et doit uniquement permettre de définir la direction de référence qui est utilisée ensuite pour guider l'aéronef au cours de la phase d'assistance à la navigation retour.

L'aéronef peut ainsi être conduit à une position de capture connue à l'aide des mesures d'écart d'azimut fournies par l'écartomètre puis être guidé à partir de cette position jusqu'au point d'aboutissement, sans nécessiter l'utilisation d'une centrale de navigation performante, intégrée à l'aéronef.

Le positionnement de l'aéronef au point de capture peut être déterminé à partir de données de distance entre l'aéronef et un point de référence au sol aligné avec le point de retour et la position de l'écartomètre.

De telles données permettent de positionner l'aéronef le long de l'axe de référence s'étendant entre le point de retour- écartomètre (AE) et ainsi de savoir quand le point de capture B est atteint.

Lesdites données de distance peuvent être estimées à partir de mesures du temps de propagation de paquets de données entre la station au sol et l'aéronef.

Lesdites données de distance peuvent être estimées à partir de mesures du temps de propagation aller de paquets de données entre la station au sol et l'aéronef, ladite station au sol et l'aéronef comprenant des horloges synchronisées.

La simple mesure d'un temps de propagation de paquets pouvant être transmis entre l'aéronef et la station au sol pour d'autres besoins permet ainsi de déterminer si le point de capture est atteint, sans rendre nécessaire l'utilisation d'un système supplémentaire embarqué ou au sol, et donc en minimisant la consommation d'énergie par l'aéronef.

La détermination du positionnement de l'aéronef au point de capture peut comprendre l'estimation de données de vitesse dudit aéronef et la détermination d'une distance parcourue par l'aéronef depuis le point de retour à partir desdites données de vitesse.

Le dispositif de traitement de données étant configuré pour être relié en outre à un système optronique comprenant un dispositif de capture d'images embarqué dans l'aéronef et positionné selon l'axe de l'aéronef ainsi qu'un dispositif de traitement d'image, adapté au traitement desdites images, les données de vitesse dudit aéronef peuvent être estimées par ledit système optronique par mesure de vitesse de défilement du sol à l'aide d'images capturées par ledit dispositif de capture d'images et de données d'altitude fournies par l'altimètre.

L'aéronef peut ainsi déterminer son positionnement sur l'axe point de retour-écartomètre (AE) de manière autonome, avec une précision indépendante de la distance le séparant de l'écartomètre et de la station au sol.

Les données de vitesse dudit aéronef peuvent également être estimées par mesure d'un effet doppler engendré par le mouvement de l'aéronef sur des signaux échangés entre l'aéronef et la station au sol.

La vitesse de l'aéronef peut ainsi être déterminée même en cas de conditions météorologiques défavorables cachant le sol.

Le dispositif de traitement de données étant configuré pour être relié en outre à un dispositif de capture d'images embarqué dans l'aéronef, le positionnement de l'aéronef au point de capture peut être déterminé par la détection d'un amer de position connue dans au moins une image capturée par ledit dispositif de capture d'images.

Une telle détection permet de déterminer le positionnement de l'aéronef au point de capture B avec une incertitude réduite, la position de l'amer détecté pouvant être connue de manière très précise.

L'aéronef peut être guidé entre le point de retour et le point de capture selon une trajectoire prédéfinie rectiligne en direction de la position de l'écartomètre.

Une telle trajectoire permet de minimiser la distance parcourue et donc l'énergie consommée par l'aéronef pour parvenir au point de capture B.

L'aéronef peut être guidé entre le point de retour et le point de capture selon une trajectoire en zigzag ou en paliers.

Une telle trajectoire permet d'améliorer la précision de guidage de l'aéronef, en comparant les données de positionnement de l'aéronef vues par l'écartomètre et les valeurs correspondantes telles que déterminées par l'aéronef.

Le dispositif de traitement de données étant configuré pour être relié en outre à une caméra embarquée dans l'aéronef, la phase d'assistance à l'atterrissage peut comprendre l'estimation d'une position du point d'aboutissement dans une image de la piste d'atterrissage capturée par la caméra et l'estimation d'une position de l'aéronef en fonction de ladite position du point d'aboutissement estimée dans l'image et de données d'altitude fournies par l'altimètre, et ledit guidage de l'aéronef du point d'accroche au point d'aboutissement est réalisé en maintenant l'aéronef aligné avec l'axe de la piste d'atterrissage.

Le guidage de l'aéronef peut ainsi être réalisé tout au long de l'atterrissage avec une incertitude plus faible que s'il était réalisé à partir des mesures de l'écartomètre. Cette précision accrue permet de guider de manière sûre l'aéronef entre le point d'accroche et le point d'aboutissement et de le faire atterrir.

Le dispositif de traitement de données étant en outre configuré pour être relié à un émetteur-récepteur embarqué sur ledit aéronef et destiné à recevoir des signaux émis par au moins trois émetteurs-récepteurs positionnés au sol, la phase d'assistance à l'atterrissage peut comprendre l'estimation de données de position de l'aéronef à partir de données de distances entre l'émetteur-récepteur embarqué et lesdits au moins trois émetteurs-récepteurs au sol.

L'utilisation d'informations de distance entre l'aéronef et des points fixes au sol de position connue comme les émetteurs-récepteurs au sol permet de diminuer l'incertitude de la position de l'aéronef de façon à guider précisément l'aéronef jusqu'au point d'aboutissement.

Selon un deuxième aspect, l'invention concerne un produit programme d'ordinateur comprenant des instructions de code pour l'exécution du procédé selon le premier aspect lorsque ce programme est exécuté par un processeur.

Selon un troisième aspect, l'invention concerne un dispositif de traitement de données configuré pour la mise en oeuvre du procédé d'assistance selon le premier aspect.

Selon un quatrième aspect, l'invention concerne un système d'assistance automatique à l'atterrissage d'un aéronef sur une piste d'atterrissage depuis un point de retour jusqu'à un point d'aboutissement au niveau duquel l'aéronef entre en contact avec la piste d'atterrissage comprenant :

- un altimètre configuré pour mesurer l'altitude de l'aéronef,

- un écartomètre positionné au niveau d'une station au sol et configuré pour mesurer par rapport à un point de référence un écart d'azimut de l'aéronef par rapport à une direction de référence reliant ledit point de retour et la position de l'écartomètre,

- le dispositif de traitement de données selon le troisième aspect.

Ledit système d'assistance selon le quatrième aspect peut comprendre en outre un système optronique comprenant un dispositif de capture d'images embarqué dans l'aéronef et configuré pour être relié au dispositif de traitement de données.

Ledit système d'assistance selon le quatrième aspect peut comprendre en outre une caméra et son dispositif de traitement d'images associé, configurés pour être reliés au dispositif de traitement de données.

Ledit système d'assistance selon le quatrième aspect peut comprendre en outre :

- au moins trois émetteurs-récepteurs positionnés au sol ;

- un émetteur-récepteur configuré pour recevoir des signaux émis par lesdits au moins trois émetteurs-récepteurs positionnés au sol, embarqué sur ledit aéronef et configuré pour être relié au dispositif de traitement de données.

De tels produit programme d'ordinateur, dispositif de traitement de données et système présentent les mêmes avantages que ceux évoqués pour le procédé selon le premier aspect.

PRESENTATION DES FIGURES

D'autres caractéristiques et avantages apparaîtront à la lecture de la description qui va suivre d'un mode de réalisation. Cette description sera donnée en référence aux dessins annexés dans lesquels :

- la figure 1 illustre schématiquement un exemple de guidage à l'atterrissage d'un aéronef sur une piste d'atterrissage depuis un point de retour jusqu'à un point d'aboutissement selon un mode de mise en oeuvre de l'invention;

- la figure 2 illustre les différents composants pouvant être compris dans un système d'assistance à l'atterrissage d'un aéronef selon l'invention ;

- la figure 3 illustre les deux liaisons reliant le dispositif de traitement de données à une station au sol ainsi que l'écartomètre compris dans le système d'assistance à l'atterrissage selon l'invention;

- la figure 4 illustre un système d'assistance à l'atterrissage d'un aéronef selon un mode de réalisation de l'invention ;

- la figure 5 est un diagramme schématisant un exemple de mise en oeuvre du procédé d'assistance automatique à l'atterrissage d'un aéronef selon l'invention;

- la figure 6 illustre la phase d'assistance à l'atterrissage selon l'invention lorsque le système d'assistance est équipé d'une caméra;

- la figure 7 illustre le positionnement d'un réticule dans une image sur le point d'aboutissement ;

- la figure 8 est diagramme illustrant le calcul de données de position corrigées à partir de mesures transmises par l'écartomètre selon un mode de mise en oeuvre de l'invention.

DESCRIPTION DETAILLEE

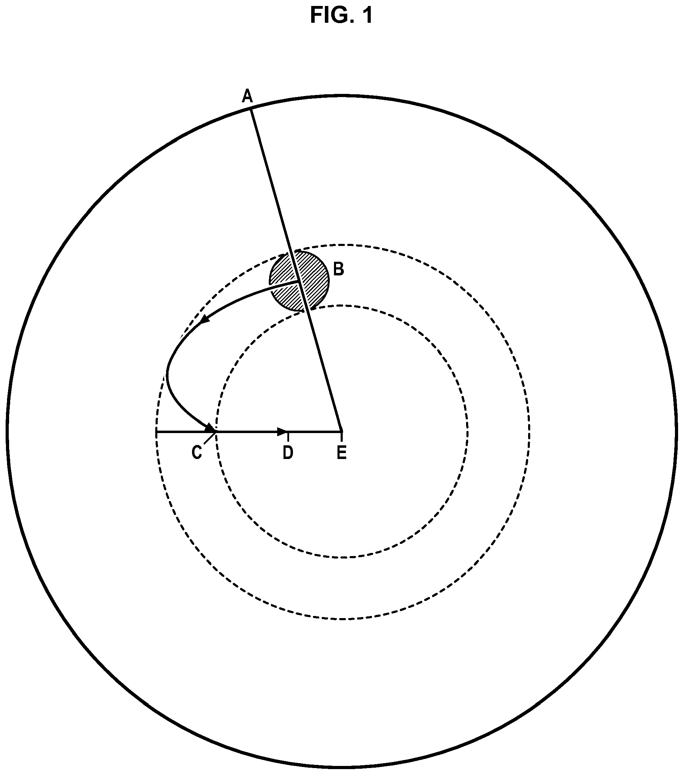

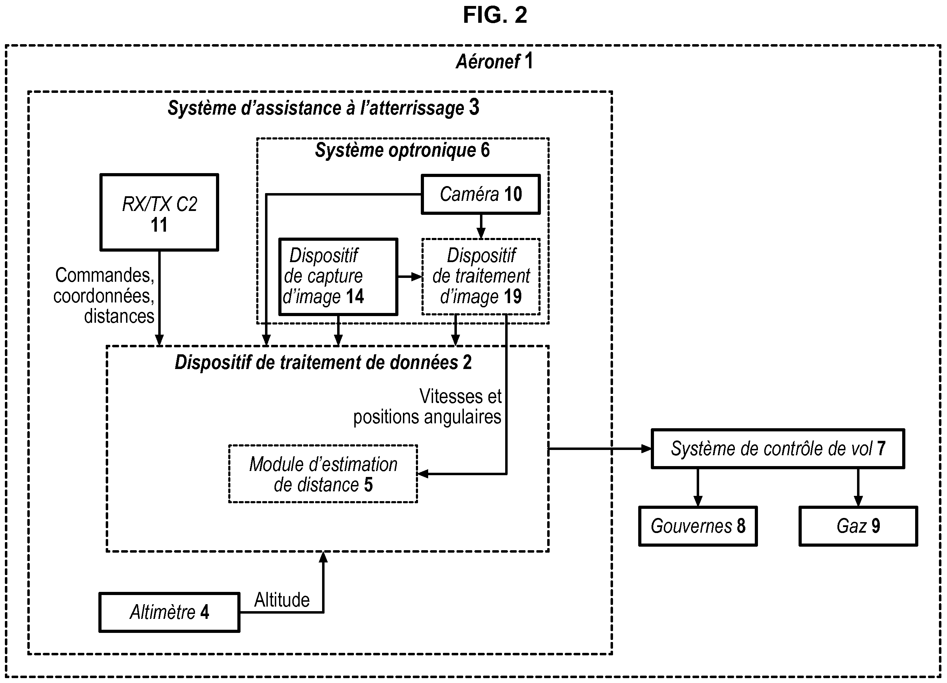

Un mode de réalisation de l'invention concerne un procédé d'assistance automatique à l'atterrissage d'un aéronef 1 sur une piste d'atterrissage depuis un point de retour A jusqu'à un point d'aboutissement D au niveau duquel l'aéronef entre en contact avec la piste d'atterrissage, comme représenté **en figure 1.**
Ce procédé est mis en oeuvre par un dispositif de traitement de données 2, d'un système d'assistance à l'atterrissage 3, comme représenté en **figure 2.** Le système d'assistance à l'atterrissage 3 peut également comprendre un altimètre 4 embarqué à bord de l'aéronef et auquel le dispositif de traitement de données peut être relié.
En référence à la figure 1, les points suivants peuvent par ailleurs être définis:

- point de retour A : point à partir duquel l'aéronef est détecté par le système d'assistance à l'atterrissage 3. On notera que, dans l'invention, ce point est défini sans que sa position (altitude, distance, etc.) ne soit connue.

- point de capture B : point à partir duquel l'aéronef entre dans une phase d'alignement avec la piste pour atterrir.

- point d'accroche C : point aligné par rapport à l'axe de la piste par lequel doit passer l'aéronef avant d'atterrir.

L'altimètre 4 peut être un altimètre barométrique ou un altimètre laser. L'altimètre barométrique peut avoir une précision à 10 mètres et peut être recalé grâce à la valeur de la pression atmosphérique QNH qui est la pression barométrique corrigée des erreurs instrumentales, de température et de gravité et ramenée au niveau moyen de la mer (MSL ou Mean Sea Level). En pratique, la pression QNH peut être donnée en référence au seuil de la piste d'atterrissage, de sorte que l'altimètre affiche l'altitude géographique du point d'aboutissement D lorsque l'aéronef se trouve sur le seuil de piste en question. L'altimètre laser peut avoir une précision à 0.2 mètres et être utilisé lorsque l'altitude est inférieure à 100 mètres.
L'aéronef 1 est par ailleurs équipé, de manière connue en soi, d'un pilote automatique configuré pour maintenir en vol l'aéronef 1 selon un cap et une altitude définis.
Ce procédé propose de guider de façon sûre un aéronef tel qu'un drone, de manière autonome, depuis un point de retour éloigné jusqu'à la piste d'atterrissage, par exemple celle d'un aéroport ou une piste plus rudimentaire, et de faire atterrir l'aéronef sur cette piste, malgré une indisponibilité du système de positionnement par satellite ou GNSS, en guidant tout d'abord l'aéronef vers un point prédéterminé, dit point de capture B, de position connue et relativement proche de la piste d'atterrissage grâce à un guidage de l'aéronef dans une direction de consigne, l'écart par rapport à ladite consigne étant déterminé et transmis par un système au sol à partir d'une mesure des données d'azimut de l'aéronef par rapport à ce système au sol.
Pour cela, le dispositif de traitement de données 2 est susceptible d'être embarqué à bord de l'appareil et peut comprendre un calculateur et une interface de communication. Un tel calculateur embarqué peut consister en un processeur ou microprocesseur, de type x-86 ou RISC par exemple, un contrôleur ou microcontrôleur, un DSP, un circuit intégré tel qu'un ASIC ou programmable tel qu'un FPGA, une combinaison de tels éléments ou tout autre combinaison de composants permettant de mettre en oeuvre les étapes de calcul du procédé décrit ci-dessous. Une telle interface de communication peut être n'importe quelle interface, analogique ou numérique, permettant au calculateur d'échanger des informations avec les autres éléments du système d'assistance 3 tels que l'altimètre 4. Une telle interface peut par exemple être une interface série RS232, une interface USB, Firewire, HDMI ou une interface réseau de type Ethernet ou encore tout type d'interface utilisée dans l'aéronautique.

Comme représenté en figure 2, le calculateur du dispositif de traitement de données 2 peut être relié à un système de contrôle de vol (SCV) 7. Le système de contrôle de vol 7 peut être chargé de procéder au guidage effectif de l'aéronef dans la direction de référence à suivre, vers le point de capture B, à partir de données de guidage fournies par le calculateur du dispositif de traitement de données, fonctions des données d'attitude de l'aéronef, telles que le cap, le roulis et le tangage, déterminées par des capteurs intégrés au SCV, et de données d'écarts d'azimut fournies par le système au sol mentionné ci-dessus. Pour cela le système de contrôle de vol peut transmettre des consignes aux organes de pilotage de l'aéronef tels que les actionneurs électriques, hydrauliques ou hybrides actionnant les gouvernes 8 ou la manette des gaz 9. L'aéronef est ainsi guidé par un asservissement sur une consigne de direction vers ledit point de capture B.

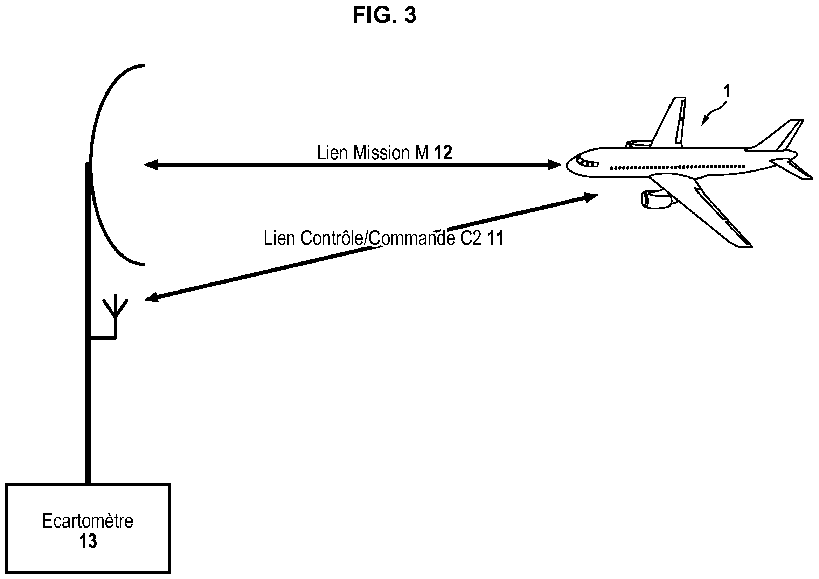

Le dispositif de traitement de données 2 peut être relié à une station au sol, généralement placée à proximité de l'aéroport ou de la piste d'atterrissage, via deux liaisons comme représenté en **Figure 3** :

- une liaison 11 dite «contrôle/commande» C2 radioélectrique et bidirectionnelle dans une bande du spectre électromagnétique comprise entre 3 et 6 GHz qui permet l'échange de messages de contrôle et de commande entre la station sol et l'aéronef. Les signaux transmis sont modulés à l'aide d'une modulation mono-porteuse et sont émis/reçus au moyen d'une antenne omnidirectionnelle montée sur une tête de mât au niveau de la station au sol ;

- une liaison de données mission 12 M radioélectrique et bidirectionnelle dans une bande du spectre électromagnétique comprise entre 10 et 15 GHz qui permet l'échange des flux de données générées par les différents capteurs embarqués. Les signaux transmis sont modulés à l'aide d'une modulation multi-porteuses et sont émis/reçus au moyen d'une antenne directionnelle telle qu'une parabole, montée en tête de mât.

Le système d'assistance à l'atterrissage 3 comprend également un écartomètre 13. Un tel écartomètre est un système au sol, relié à l'antenne directionnelle de la station au sol utilisée pour la liaison de mission 12. L'écartomètre est configuré pour mesurer de manière continue la direction dans laquelle se trouve l'aéronef, c'est-à-dire l'azimut de l'aéronef par rapport à une direction de référence, par exemple le nord. L'écartomètre peut également mesurer l'élévation de l'aéronef par rapport à un plan de référence, par exemple un plan tangent au sol. L'azimut et l'élévation de l'aéronef sont mesurés par rapport à un point de référence, par exemple par rapport à la position de l'antenne directionnelle montée en tête de mat. Ce point de référence est appelé position de l'écartomètre dans le reste de ce document et est noté E. L'écartomètre peut mesurer ces angles à partir de l'orientation de l'antenne directionnelle fournie par un dispositif électromécanique positionneur d'antenne configuré pour positionner en gisement et en site l'antenne directionnelle de façon à la faire pointer vers l'aéronef pour maximiser la qualité de la liaison.

Le procédé propose d'utiliser ces données d'azimut déterminées par l'écartomètre pour guider l'aéronef en direction de la position de l'écartomètre. Plus précisément, la direction à faire suivre à l'aéronef fait l'objet d'un asservissement en boucle fermée : l'écartomètre peut mesurer et transmettre à l'aéronef un écart entre ces données d'azimut mesurées et un azimut à suivre correspondant à la direction AE reliant le point de retour A et la position de l'écartomètre E. A partir de ces données d'écart d'azimut, le calculateur du dispositif de traitement de données détermine des données de guidage et les transmet au système de contrôle de vol, puis le système de contrôle de vol de l'aéronef peut orienter celui-ci afin d'annuler cet écart et de guider l'aéronef vers la position de l'écartomètre E.

Cette étape de procédé permet donc un guidage relatif de l'aéronef, sans qu'il soit nécessaire de le géo-localiser en déterminant, dans une étape préalable, la position du point de retour A, la position du nord magnétique ou la position de la piste d'atterrissage comme cela est proposé dans l'art antérieur. Le procédé de l'invention est donc plus simple et permet de s'affranchir du calibrage préalable du système. Il suffit en effet de détecter l'aéronef pour démarrer le guidage. En outre, l'utilisation de l'axe (AE) comme direction de référence permet de s'affranchir de l'utilisation d'une centrale de navigation embarquée.

Dans un mode de réalisation, l'élévation de l'aéronef est traitée comme son azimut. L'écartomètre peut également transmettre à l'aéronef un écart d'élévation entre l'élévation mesurée de l'aéronef et une élévation de référence correspondant à l'élévation dans la direction AE mesurée lors du positionnement de l'aéronef au point de retour A. L'utilisation d'un tel écart d'élévation par le système de contrôle de vol entraine dans ce cas une diminution progressive de l'altitude de l'aéronef au fur et à mesure de l'avancée de celui-ci vers la position de l'écartomètre.

Dans un second mode de réalisation, seules les mesures d'écart d'azimut sont employées pour le guidage de l'aéronef, réalisé à altitude constante en fonction des mesures de l'altimètre de l'aéronef.

Dans un troisième mode de réalisation, les mesures d'azimut et d'élévation sont employées pour le guidage mais l'altitude de l'aéronef est maintenu constante en faisant varier au cours du temps l'élévation de référence utilisée pour les mesures d'écart d'élévation.

Dans un dernier mode de réalisation, un guidage similaire au premier mode de réalisation est mis en oeuvre jusqu'à ce que l'aéronef ait atteint une altitude minimum, à partir de laquelle le guidage est réalisé à altitude constante.

Dans les différents modes de mise en oeuvre décrits ci-dessous, les données d'altitude de l'aéronef fournies par l'altimètre peuvent être corrigées si nécessaire afin de correspondre à l'altitude relative de l'aéronef par rapport à un point de référence, par exemple par rapport à l'altitude de l'écartomètre. Ceci permet par exemple de s'affranchir des variations d'altitude du terrain survolé par l'aéronef.

L'aéronef peut être guidé dans cette direction jusqu'à ce qu'il soit positionné à un point de capture B de position connue relativement proche de la piste d'atterrissage. Dans un mode de réalisation le point de capture B est approximativement aligné avec le point de retour A et la position de l'écartomètre E, lorsque l'azimut à suivre par l'aéronef est aligné avec l'axe AE. Alternativement, l'azimut à suivre peut être écarté de l'axe AE et le point de capture B sera alors distant de cet axe et non aligné avec le point de retour A et la position de l'écartomètre E.

A partir de ce point de capture B de position connue, une trajectoire prédéfinie peut être imposée à l'aéronef de façon à l'amener à un point d'accroche C prédéterminé approximativement aligné avec l'axe de la piste d'atterrissage, avec une direction de propagation de l'aéronef également alignée avec l'axe de la piste. Le point d'accroche C peut être situé en périphérie d'une zone d'accroche centrée sur le point d'aboutissement D ou sur la position de l'écartomètre E et de rayon prédéterminé, comme représenté en Figure 1. A titre d'exemple, une telle zone d'accroche peut présenter un rayon inférieur ou égal à 5 km.

Le système d'assistance à l'atterrissage 3 peut également comprendre un ou plusieurs systèmes supplémentaires permettant de détecter le positionnement de l'aéronef au point de capture B.

Le système d'assistance à l'atterrissage peut ainsi comprendre un système optronique 6 comprenant un dispositif de capture d'image 14 embarqué à bord de l'aéronef et un dispositif de traitement d'image 19 adapté au traitement desdites images, relié au dispositif de traitement 2. Le dispositif de traitement d'image est configuré pour pouvoir détecter tout type d'objet de caractéristiques déterminées (caractéristiques géométriques, caractéristiques lumineuses, signature thermique, etc) et en définir une position angulaire par rapport à un axe de référence (par exemple par rapport à l'axe de mouvement de l'avion passant par le centre de l'image capturée ou toute position définie dans cette image). Ce dispositif de capture et son dispositif de traitement d'images associé peut être employé pour détecter un repère au sol situé au point de capture B ou à proximité de celui-ci. Un tel repère au sol est appelé amer et peut par exemple consister en un bâtiment, un marquage ou repère géographique tel qu'un croisement de routes. La détection de ce repère dans les images capturées par le dispositif de capture d'image permet de déterminer à quel moment l'aéronef est situé approximativement au point de capture B. Le champ de vision du dispositif de capture d'image n'est pas nécessairement centré sur l'axe de déplacement de l'aéronef. L'angle entre l'axe de déplacement de l'aéronef et l'axe reliant le dispositif de capture d'images et un point prédéterminé des images capturées par le dispositif, par exemple leur centre, peut être déterminé par construction ou par calibrage afin de connaître la direction de propagation de l'aéronef par rapport aux images capturées par ce dispositif. Cette direction peut être matérialisée dans les images capturées si elle fait partie du champ de vision du dispositif et est connue du dispositif de traitement d'images.

Le positionnement de l'aéronef au point de capture B peut également être déterminé à partir d'une mesure de distance entre l'aéronef et un point de référence au sol aligné avec le point de retour A et la position de l'écartomètre E. Ce point de référence au sol peut par exemple être la position de l'écartomètre E elle-même. Les données de distance entre l'aéronef et la position de l'écartomètre peuvent être déterminées par la station au sol, en fonction du temps de transmission d'un signal entre la station au sol et l'aéronef ou bien encore à l'aide d'un autre système tel qu'un radar, puis ces données de distance peuvent être transmises à l'aéronef par le biais de la liaison de contrôle/commande 11. Alternativement, comme représenté en figure 2, l'aéronef peut estimer lui-même la distance le séparant de la station au sol. Le système d'assistance 3 peut alors comprendre un module d'estimation de distance 5 embarqué à bord de l'aéronef et chargé d'estimer la distance entre l'aéronef et la station au sol. Ce module peut être intégré au dispositif de traitement 2. Le module d'estimation de distance peut estimer cette distance par une mesure du temps de propagation d'au moins un paquet de données entre l'aéronef et la station au sol sur la liaison de contrôle/commande 11 ou sur la liaison de mission 12. Alternativement le module d'estimation de distance peut intégrer ou être relié à un émetteur-récepteur supplémentaire embarqué dédié à l'échange de paquets de données avec la station au sol pour la mesure de la distance entre l'aéronef et la station ; le module d'estimation de distance peut alors estimer cette distance par une mesure du temps de propagation d'au moins un paquet de données entre l'aéronef et la station au sol par le biais de cet émetteur-récepteur supplémentaire. Les paquets de données transmis entre l'aéronef et la station au sol peuvent être horodatés de façon à ce qu'un temps de propagation en aller simple puisse être déterminé entre l'aéronef et la station au sol. L'aéronef peut alors embarquer une horloge synchronisée avec une horloge de la station au sol.

Le positionnement de l'aéronef au point de capture B peut également être déterminé par le calcul, à partir de données de vitesses de l'aéronef par rapport au sol, de la distance parcourue par l'aéronef depuis le point de retour A. Ces données de vitesses peuvent être obtenues par le biais du système optronique 6 ou bien par une mesure de vitesse par un autre équipement embarqué décrit ci-dessus, par exemple par une mesure d'effet doppler sur les ondes électromagnétiques échangées sur une des deux liaisons de données, ou bien encore par une mesure de vitesse par un ou plusieurs dispositifs additionnels dédiés embarqué sur l'aéronef. Par exemple une sonde pitot peut être utilisée pour mesurer la vitesse relative de l'aéronef par rapport à l'air ambiant, un autre capteur, situé par exemple au niveau de la station sol, peut être employé pour mesurer la vitesse du vent et ces deux mesures peuvent être combinées pour estimer la vitesse de l'aéronef par rapport au sol.

Le système d'assistance à l'atterrissage 3 peut comprendre un système de positionnement supplémentaire dédié au guidage de l'aéronef dans la zone d'accroche lors d'une phase d'atterrissage jusqu'au point d'aboutissement.

Dans un premier mode de réalisation, le système d'assistance à l'atterrissage 3 comprend une caméra 10 embarquée à bord de l'aéronef à laquelle le dispositif de traitement d'image peut être relié. Une telle caméra peut être une caméra panoramique infrarouge par exemple de type SWIR (« Short Wave Infrared Range », de longueur d'onde entre 0.9 et 1.7 microns), MWIR (« Médium Wave Infrared Range ») ou LWIR (« Long Wave Infrared Range »). Elle peut aussi fonctionner dans le spectre visible. Cette caméra 10 peut être confondue avec le dispositif de capture d'image 14 ou bien en être distinct. Le flux vidéo acquis par la caméra est transmis d'une part au dispositif de traitement d'image 19 de façon à repérer la piste d'atterrissage et à déterminer, via le dispositif de traitement 2, la position de l'aéronef par rapport à celle-ci lors de l'atterrissage, et d'autre part à la station au sol au moyen de la liaison « mission ». Dans un mode de réalisation la caméra consiste en un système de capture d'image pouvant comprendre plusieurs champs optiques, plusieurs bandes spectrales de détection voire plusieurs capteurs d'image en fonctions des missions qui lui sont assignées. Le système de traitement d'images est configuré pour pouvoir combiner et analyser toutes ses images selon des procédés connus.

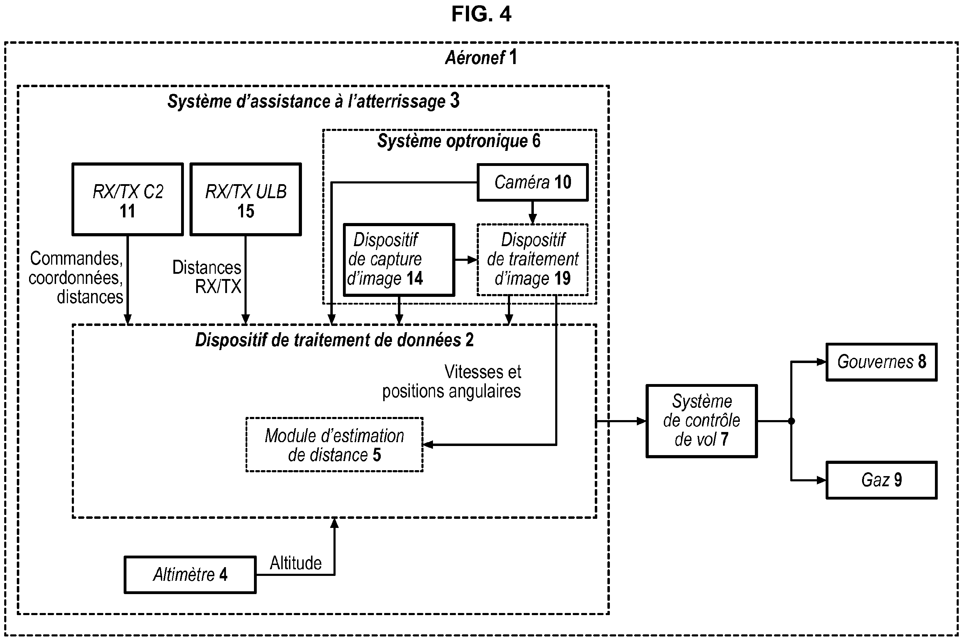

Dans un deuxième mode de réalisation représenté en **figure 4,** le système d'assistance à l'atterrissage 3 comprend au moins un émetteur-récepteur positionné au sol et un émetteur-récepteur embarqué 15 sur l'aéronef et configuré pour être relié au dispositif de traitement de données 2. De tels émetteurs-récepteurs peuvent être des balises radioélectriques ULB (Ultra large bande). En échangeant des signaux avec le ou les émetteurs-récepteurs au sol, l'émetteur-récepteur embarqué est capable de déterminer la distance le séparant de chacun des émetteurs-récepteurs au sol, par exemple par une mesure du temps de transmission aller-retour d'un signal. L'émetteur-récepteur embarqué est également configuré pour transmettre ces distances au dispositif de traitement 2. Connaissant les positions des émetteurs-récepteurs au sol, le dispositif de traitement 2 peut alors déterminer une position de l'aéronef corrigée à partir des données d'azimut et d'élévation transmises par l'écartomètre et les données de distance fournies par l'émetteur-récepteur embarqué. En pratique, une position de l'aéronef peut être estimée de cette manière à l'aide d'au moins quatre émetteurs-récepteurs ou bien d'au moins trois émetteurs récepteurs plus une information d'altitude de l'aéronef fournie par l'altimètre.

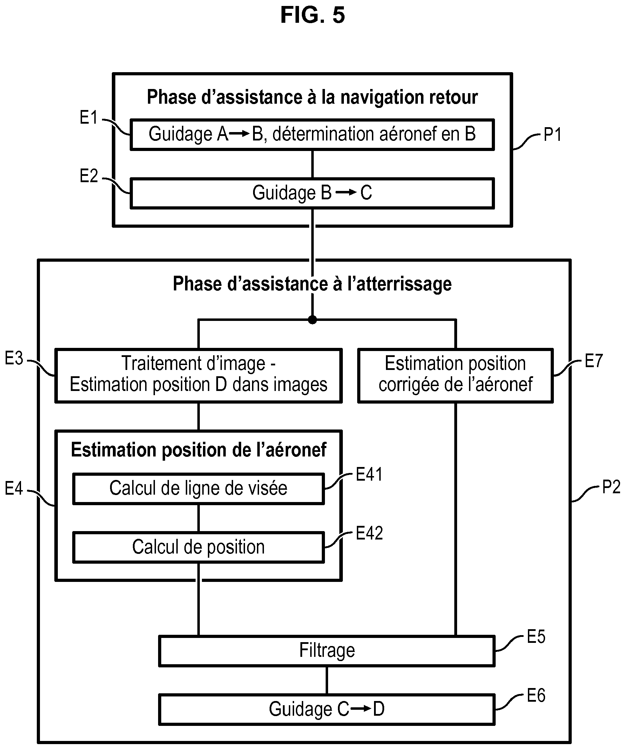

Les étapes du procédé sont décrites plus en détail dans les paragraphes suivants, en référence à la **figure 5.**

Le procédé peut comprendre une phase d'assistance à la navigation retour P1 au cours de laquelle le dispositif de traitement réalise le guidage de l'aéronef le long d'une trajectoire prédéfinie du point de retour A jusqu'au point d'accroche C prédéterminé approximativement aligné avec l'axe de la piste d'atterrissage, à partir de données d'altitude fournies par l'altimètre 4, de données de cap et de vitesse de l'aéronef et de données d'écart (notamment d'azimut et le cas échéant d'élévation) transmises par l'écartomètre.

Le procédé peut également comprendre une phase d'assistance à l'atterrissage P2 au cours de laquelle le dispositif de traitement réalise le guidage de l'aéronef du point d'accroche C au point d'aboutissement D situé sur la piste d'atterrissage.

La phase d'assistance à la navigation P1 peut comprendre une première étape de guidage E1 de l'aéronef du point de retour A en direction de la position de l'écartomètre E, à partir de mesures d'écart d'azimut par rapport à une direction de référence transmises par l'écartomètre. Pour cela, la direction AE reliant le point de retour A et la position de l'écartomètre E peut être prise comme direction de référence et la mesure de l'azimut réel de l'aéronef mesurée à chaque instant par l'écartomètre peut être utilisée par celui-ci pour déterminer à chaque instant l'écart entre l'azimut mesuré et la direction de référence. L'écartomètre peut ensuite à chaque instant transmettre au dispositif de traitement de données par l'intermédiaire d'une des liaisons de données l'écart d'azimut calculé. Le dispositif de traitement peut alors à chaque instant guider l'aéronef de façon à annuler cet écart, faisant ainsi suivre à l'aéronef la direction de référence le dirigeant vers la position de l'écartomètre E. Cette première étape de guidage E1 peut comprendre une détermination du positionnement de l'aéronef au point de capture prédéterminé B approximativement aligné avec le point de retour A et la position de l'écartomètre E. Le dispositif de traitement peut ainsi déterminer à quel moment l'aéronef, dont la position réelle est inconnue depuis son départ du point de retour A, atteint le point de capture B de position connue.

Comme expliqué ci-dessus, le positionnement de l'aéronef au point de capture B peut être déterminé à partir de données de distance entre l'aéronef 1 et un point de référence au sol aligné avec le point de retour A et la position de l'écartomètre E, tel que le point E lui-même. Les positions de l'écartomètre E et du point de capture B étant connues, et l'aéronef étant aligné avec ces deux points, le dispositif de traitement peut à partir des données de distance entre l'aéronef et l'écartomètre déduire la distance entre l'aéronef et le point de capture B. Lorsque cette distance est nulle, l'aéronef est situé au point de capture B, aux incertitudes des mesures près.

Ces données de distance peuvent être reçues par une des liaisons radioélectrique bidirectionnelles en provenance de la station au sol. Ces données de distance peuvent également être déterminées par le dispositif de traitement lui-même, à partir de mesures du temps de propagation aller simple ou aller-retour entre l'aéronef et la station au sol.

Alternativement, ces données de distance peuvent être déterminées en déterminant une position de l'aéronef à partir d'une variation contrôlée d'azimut de l'aéronef, ou d'élévation de l'aéronef lorsque celui-ci est suffisamment proche de la station au sol. Une telle variation contrôlée peut être induite par un télépilote situé dans la station au sol. Pour cela, l'aéronef peut par exemple effectuer une variation d'altitude prédéterminée, contrôlée à l'aide des mesures de l'altimètre. Une telle variation entraine une variation d'élévation dans les données de mesure obtenues par l'écartomètre. Cette variation permet de déterminer la position de l'aéronef et donc la distance à laquelle l'aéronef se trouve de la position de l'écartomètre E.

La détermination du positionnement de l'aéronef au point de capture B peut comprendre l'estimation de données de vitesse dudit aéronef et la détermination d'une distance parcourue par l'aéronef depuis le point de retour A à partir desdites données de vitesse, par exemple en réalisant leur intégration au cours du déplacement de l'aéronef. Les positions du point de retour A et du point de capture B étant connues, et l'aéronef étant aligné avec ces deux points, le dispositif de traitement peut à partir des données de distance entre l'aéronef et le point de retour A déduire la distance entre l'aéronef et le point de capture B. Lorsque cette distance est nulle, l'aéronef est situé au point de capture B, aux incertitudes des mesures près.

Les données de vitesse de l'aéronef peuvent être estimées par le système optronique 6 par mesure de la vitesse de défilement du sol à l'aide d'images capturées par le dispositif de capture d'images et de données d'altitude fournies par l'altimètre.

Les données de vitesse de l'aéronef peuvent également être estimées par mesure d'un effet doppler engendré par le mouvement de l'aéronef. Par exemple, le dispositif de traitement de données peut mesurer un décalage en fréquence induit par le déplacement de l'aéronef dans les signaux reçus sur une des deux liaisons de données en provenance de la station au sol et de l'écartomètre.

Les données de vitesse de l'aéronef peuvent également être mesurées par un autre système embarqué tel que des sondes pitot. De telles sondes ne mesurant que la vitesse de l'aéronef par rapport à l'air ambiant et pouvant ainsi ne pas refléter fidèlement la vitesse de l'aéronef par rapport au sol en cas de vent, ces données peuvent être complétées par des informations de vitesse des vents ambiants le long de la trajectoire suivie par l'aéronef. Ces informations de vitesse peuvent être déterminées par une station météo, intégrée à la station au sol selon des procédés connus.

La détermination du positionnement de l'aéronef au point de capture B peut par ailleurs être déterminée par la détection d'un amer de position connue dans au moins une image capturée par ledit dispositif de capture d'images, comme expliqué ci-dessus, complétée des données d'altitude de l'aéronef fournies par l'altimètre. Le dispositif de capture d'image peut également être employé pour détecter un amer de position connue bien avant que l'aéronef n'arrive à proximité du point de capture B, au cours du trajet depuis le point de retour. Une telle détection peut être employée pour vérifier, et corriger si nécessaire, la distance entre la position courante de l'aéronef et le point de capture B déterminée par un des moyens décrits ci-dessus.

Un tel amer permettant de déterminer le positionnement de l'aéronef au point de capture B peut être la position E de l'écartomètre elle-même. Au cours de la première étape de guidage E1, l'aéronef se dirige en effet vers la position de l'écartomètre E qui se situe donc dans l'axe de propagation de l'aéronef et dans le champ de vision du système optronique. Le système optronique est capable de détecter dans les images du dispositif de capture d'image l'écartomètre à une distance d'environ 1 à 2 km. L'écartomètre étant généralement situé à proximité de la piste d'atterrissage, l'aéronef se trouve alors à une distance comparable de celle-ci et adaptée pour mettre en oeuvre un mouvement prédéfini jusqu'au point d'accroche C de façon à aligner l'aéronef avec l'axe de la piste d'atterrissage. Le point d'accroche C peut également être confondu avec la position de l'écartomètre E si celui-ci est approximativement aligné avec l'axe de la piste.

Dans les différents modes de détermination du positionnement de l'aéronef au point de capture B faisant intervenir le système optronique, celui-ci peut exploiter des images issues de la caméra, par exemple en cas de panne du dispositif de capture d'image 14.

Lors d'une telle détermination du positionnement de l'aéronef au point de capture B en fonction de la position de l'écartomètre E, la connaissance des coordonnées géographiques absolues du point de capture B, du point d'accroche C et de la position de l'écartomètre E n'est pas nécessaire. La connaissance des positions relatives de ces points entre eux et par rapport à la piste d'atterrissage est suffisante pour guider efficacement l'aéronef de manière relative par rapport à la piste et le positionner correctement pour son atterrissage. Ceci peut être particulièrement intéressant lorsque la piste d'atterrissage est provisoire et que les conditions, telle qu'une absence de signal GPS par exemple, rendent délicat le positionnement précis de la piste. De plus, aucun autre point de référence n'est nécessaire pour permettre le bon fonctionnement du système optronique et du guidage de l'aéronef.

La détermination du positionnement de l'aéronef au point de capture B peut enfin être déterminée en déterminant des données de position de l'aéronef comme la longitude et la latitude. Les données de positionnement par satellite étant indisponibles, la position de l'aéronef peut être déterminée à partir de :

- l'azimut mesuré par l'écartomètre, et

- de deux données parmi :

  ◦ l'élévation de l'aéronef mesurable par l'écartomètre,

  ◦ la distance entre l'aéronef et l'écartomètre, déterminée comme indiquée ci-dessus,

  ◦ l'altitude de l'aéronef par rapport à l'écartomètre obtenue à partir des mesures de l'altimètre.

Le calcul des données de position à l'aide de mesures transmises par l'écartomètre peut être réalisé en coordonnées polaires centrées sur la position de l'écartomètre E, puis les données de position de l'aéronef obtenues peuvent être converties en coordonnées cartésiennes sous forme de longitude et de latitude.

A l'issue de la première étape de guidage E1, l'aéronef est ainsi positionné au point de capture B. La phase d'assistance à la navigation retour P1 peut alors comprendre une deuxième étape de guidage E2 de l'aéronef le long d'une trajectoire prédéfinie du point de capture B jusqu'au point d'accroche C approximativement aligné avec l'axe de la piste d'atterrissage. Le long de cette trajectoire prédéfinie, l'aéronef peut être dévié de la trajectoire théorique à suivre par le vent. Afin de corriger la position de l'aéronef pour le maintenir sur la trajectoire prédéfinie, le guidage de l'aéronef peut être réalisé à partir de données d'altitude fournies par l'altimètre et de données de cap et de vitesse de l'aéronef. Le guidage peut aussi être amélioré en tenant compte des données météorologiques locales, telles que les données du vent, ou encore en recalant ponctuellement ou continûment l'aéronef par rapport à un amer particulier, par exemple le point d'aboutissement D ou la position de l'écartomètre E. En particulier, le guidage de l'aéronef peut être réalisé en en gardant visible cet amer dans les images capturées par le système optronique à une position angulaire définie en fonction de la progression le long de la trajectoire entre le point de capture B et le point d'accroche C.

Au cours de cette première étape de guidage E1, la trajectoire prédéfinie suivie par l'aéronef entre le point de retour A et le point de capture B peut être rectiligne en direction de la position de l'écartomètre, minimisant ainsi la distance parcourue et l'énergie consommée pour parvenir au point de capture B.

Alternativement, la trajectoire prédéfinie suivie par l'aéronef entre le point de retour A et le point de capture B peut être en zigzag ou en paliers. Une telle trajectoire permet alors de faire varier légèrement l'orientation de la position de l'antenne directionnelle de la station au sol et donc de réduire l'incertitude sur l'azimut et/ou l'élévation mesurés par l'écartomètre.

Les étapes décrites ci-dessus permettent d'obtenir la position de l'aéronef avec une précision suffisante pour faire parvenir l'aéronef dans l'alignement de la piste jusqu'au point d'accroche C. Néanmoins la précision obtenue peut s'avérer insuffisante pour guider l'aéronef jusqu'au point d'aboutissement et le faire atterrir sur la piste d'atterrissage. Avec une incertitude de positionnement insuffisante, l'aéronef risque d'être guidé à côté de la piste. Il peut donc être souhaitable d'obtenir la position de l'aéronef avec une précision accrue garantissant un atterrissage sûr.

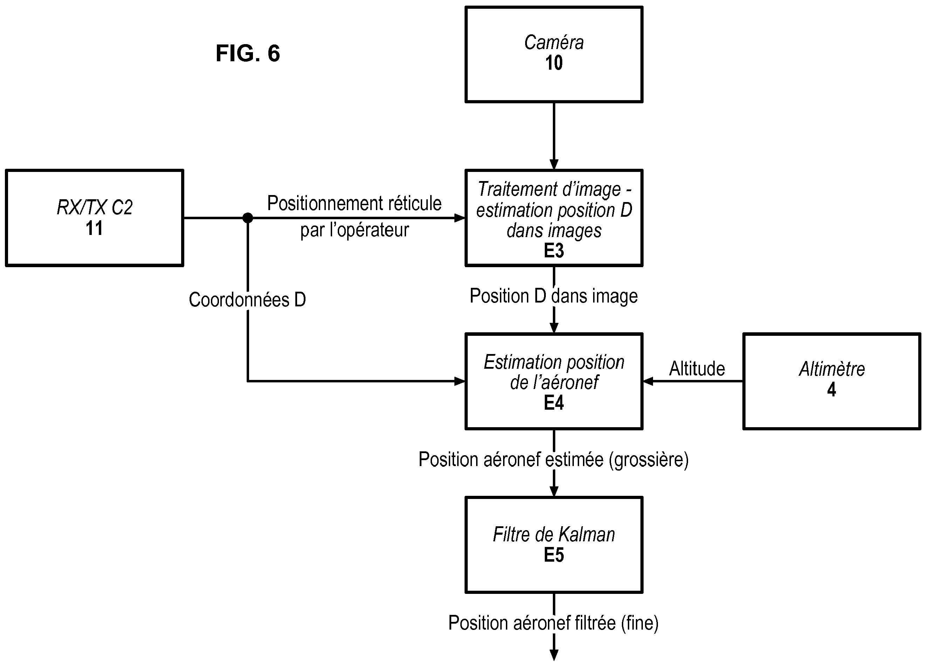

Dans un premier mode de réalisation, représenté en figure 5 et en **figure 6,** la phase d'assistance à l'atterrissage P2, au cours de laquelle l'aéronef est guidé du point d'accroche C au point d'aboutissement D, peut exploiter les images de la piste d'atterrissage et du point d'aboutissement D fournies par la caméra 10 embarquée à bord de l'aéronef. Pour cela, la phase d'assistance à l'atterrissage P2 peut comprendre une étape de traitement d'image E3 au cours de laquelle la position du point d'aboutissement D est estimée dans une ou plusieurs images parmi le flux d'images de la piste d'atterrissage successivement capturées par la caméra. Cette étape peut être mise en oeuvre de manière répétée tout au long de l'approche de l'aéronef vers la piste et de son atterrissage.

Cette détection du point d'aboutissement dans une image peut être entièrement automatique si le point d'aboutissement est facilement détectable dans l'image, par exemple si le point d'aboutissement est matérialisé sur la piste d'atterrissage par un repère au sol, ou bien si la piste elle-même est repérable par la présence au sol d'un ou plusieurs repères tels que des marquages ou des lumières visibles dans la bande spectrale de système optronique. La position du point d'aboutissement dans l'image peut alors être déterminée par des techniques connues de reconnaissance de forme ou d'image.

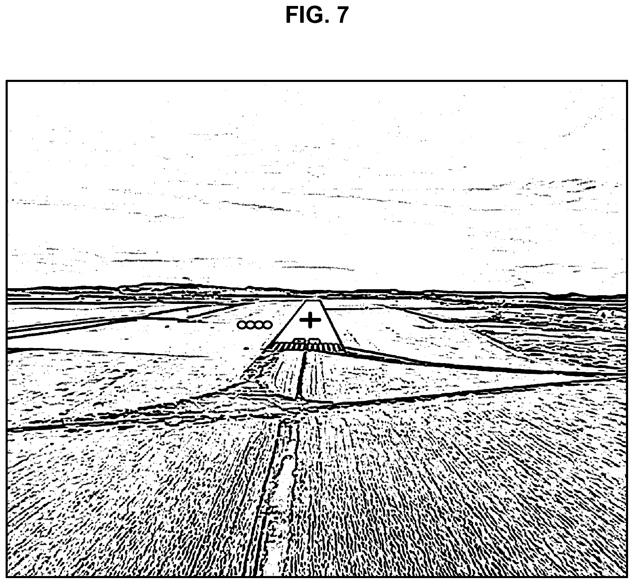

Alternativement, la position du point d'aboutissement dans une image peut être spécifiée par un opérateur humain dans une première image, par le biais de la liaison contrôle/commande 11, par exemple en positionnant dans l'image un réticule de visée sur le point d'aboutissement, comme représenté en **figure 7.** Puis, le dispositif de traitement peut assurer le pistage (« tracking ») de la position du point d'aboutissement pointée par le réticule dans les images fournies ultérieurement par la caméra embarquée, et ajuster automatiquement la position du réticule pour le maintenir centré sur le point d'aboutissement. Une telle initiation manuelle du pistage peut être nécessaire lorsque le marquage de la piste d'atterrissage ou du point d'aboutissement est insuffisant pour une détection automatique, ou lorsque les conditions de vol (vol de nuit, pluie, brouillard...) ne permettent pas une telle détection automatique. Si nécessaire, l'opérateur peut corriger le pistage de position en ajustant manuellement une ou plusieurs fois la position du réticule dans l'image courante afin que le réticule reste bien positionné sur le point d'aboutissement dans les images successives traitées. Pour faciliter le pistage automatique de la position du point d'aboutissement, des sources lumineuses visibles ou infrarouges, adaptées au spectre de détection du système de capture d'image peuvent être disposées de part et d'autre de la piste d'atterrissage à hauteur du point d'aboutissement.

La phase d'assistance à l'atterrissage P2 peut également comprendre une première étape de détermination de position E4 au cours de laquelle la position de l'aéronef est estimée en fonction de la position du point d'aboutissement estimée dans l'image lors de l'étape de traitement d'image E3. Cette estimation nécessite également des données d'altitude de l'aéronef fournies par l'altimètre et les coordonnées du point d'aboutissement qui peuvent être fournies par la station au sol par l'intermédiaire de la liaison contrôle/commande 11. A l'issue de la première étape de détermination de position E4, le dispositif de traitement dispose d'une position de l'aéronef, par exemple sous forme de longitude et de latitude. Cette position peut être alors employée pour réaliser le guidage de l'aéronef jusqu'à son atterrissage au point d'aboutissement D lors d'une troisième étape de guidage E6 au cours de laquelle le guidage de l'aéronef du point d'accroche C au point d'aboutissement D est réalisé en maintenant l'aéronef aligné avec l'axe de la piste d'atterrissage. Les données de position de l'aéronef obtenues à l'issue de la première étape de détermination de position E4 peuvent être filtrées à l'aide d'un filtre de Kalman lors d'une étape de filtrage E5 afin d'affiner l'estimation de la position de l'aéronef avant d'utiliser cette position pour réaliser le guidage de l'aéronef lors de la troisième étape de guidage E6.

Un exemple non limitatif de mode de mise en oeuvre de la première étape de détermination de position E4 sera donné dans les paragraphes suivants. Alternativement d'autres modes de mise en oeuvre bien connus de l'Homme du Métier pourraient être mis en oeuvre. Comme représenté en figure 5, la première étape de détermination de position E4 peut comprendre une étape de calcul de ligne de visée E41 au cours de laquelle la ligne de visée de l'aéronef au point d'aboutissement D est déterminée dans le repère terrestre centré.

Cette détermination peut être réalisée à partir de :

- $(D_L, D_G, D_z)$ la position du point d'aboutissement D fournie par la station au sol,

- $(D_H, D_V)$ les abscisse et ordonnée du point d'aboutissement pointé par le réticule dans l'image de la caméra embarquée obtenues à l'issue de l'étape de traitement d'image E3, par exemple par rapport au coin supérieur gauche de l'image,

- $(C_\varphi, C_\theta, C_\psi)$ les angles de positionnement de la caméra embarquée dans un repère attaché à l'aéronef,

- $(C_{AOH}, C_{AOV})$ les angles horizontal et vertical d'ouverture de la caméra,

- $(C_{RH}, C_{RV})$ les résolutions horizontale et verticale de la caméra,

- $(A_\varphi, A_\theta, A_\psi)$ les angles de roulis, tangage et cap de l'aéronef fournis par la centrale inertielle,

- $A_Z$ l'altitude de l'aéronef fournie par l'altimètre.

On note par ailleurs :

- Cazimut et Celevation l'azimut et l'élévation de l'aéronef dans le repère de la caméra

- RT le rayon terrestre

- Vx : vecteur associé à la ligne de visée dans le repère caméra

- Vy : vecteur associé à la 1ère normale à la ligne de visée dans le repère caméra

- Vz : vecteur associé à la 2ème normale à la ligne de visée dans le repère caméra

- Wx : vecteur associé à la ligne de visée dans le repère terrestre centré

- Wy : vecteur associé à la 1ère normale à la ligne de visée dans le repère terrestre centré

- Wz : vecteur associé à la 2ème normale à la ligne de visée dans le repère terrestre centré

L'étape de calcul de ligne de visée E41 peut alors comprendre les opérations suivantes :

- détermination de l'angle élémentaire associé à un pixel

$$A_H = \frac{C_{AOH}}{C_{RH}}$$

$$A_V = \frac{C_{AOV}}{C_{RV}}$$

- détermination de la position angulaire de la ligne de visée par rapport à l'axe de la caméra,

$$C_{azimut} = D_H \cdot A_H - \frac{C_{AOH}}{2}$$

$$C_{élévation} = D_V \cdot A_V - \frac{C_{AOV}}{2}$$

- détermination de la ligne de visée dans le repère de la caméra :

  Vecteur associé à la ligne de visée vers le point d'aboutissement :

$$V_x = \begin{pmatrix} \cos(C_{azimut})\cos(C_{élévation}) \\ \sin(C_{azimut})\cos(C_{élévation}) \\ \sin(C_{élévation}) \end{pmatrix}$$

  Vecteur associé à la première normale à la ligne de visée vers le point d'aboutissement :

$$V_y = \begin{pmatrix} -\sin(C_{azimut}) \\ \cos(C_{azimut}) \\ 0 \end{pmatrix}$$

  Vecteur associé à la deuxième normale à la ligne de visée vers le point d'aboutissement :

$$V_z = V_x \wedge V_y$$

- constitution d'une matrice de passage du repère de la caméra au repère de l'aéronef :

$$MP_{C \to A}$$
$$= \begin{pmatrix} \cos(C_\theta)\cos(C_\psi) & \sin(C_\theta)\sin(C_\varphi)\cos(C_\psi) - \sin(C_\psi)\cos(C_\varphi) & \cos(C_\psi)\sin(C_\theta)\cos(C_\varphi) + \sin(C_\varphi)\sin(C_\psi) \\ \cos(C_\theta)\sin(C_\psi) & \sin(C_\theta)\sin(C_\varphi)\sin(C_\psi) + \cos(C_\psi)\cos(C_\varphi) & \sin(C_\theta)\cos(C_\varphi)\sin(C_\psi) - \sin(C_\varphi)\cos(C_\psi) \\ -\sin(C_\theta) & \cos(C_\theta)\sin(C_\varphi) & \cos(C_\theta)\cos(C_\varphi) \end{pmatrix}$$

- constitution d'une matrice de passage du repère de l'aéronef au repère terrestre local du point d'aboutissement :

$$MP_{A \to RTL}$$
$$= \begin{pmatrix} \cos(A_\theta)\cos(A_\psi) & \sin(A_\theta)\sin(A_\varphi)\cos(A_\psi) - \sin(A_\psi)\cos(A_\varphi) & \cos(A_\psi)\sin(A_\theta)\cos(A_\varphi) + \sin(A_\varphi)\sin(A_\psi) \\ \cos(A_\theta)\sin(A_\psi) & \sin(A_\theta)\sin(A_\varphi)\sin(A_\psi) + \cos(A_\psi)\cos(A_\varphi) & \sin(A_\theta)\cos(A_\varphi)\sin(A_\psi) - \sin(A_\varphi)\cos(A_\psi) \\ -\sin(A_\theta) & \cos(A_\theta)\sin(A_\varphi) & \cos(A_\theta)\cos(A_\varphi) \end{pmatrix}$$

- constitution d'une matrice de passage du repère terrestre local du point d'aboutissement au repère terrestre centré :

$$MP_{RTL \to RTC} = \begin{pmatrix} x_t & y_t & -u_t \end{pmatrix}$$

$$u_t = \begin{pmatrix} \cos(D_L)\cos(D_G) \\ \cos(D_L)\sin(D_G) \\ \sin(D_L) \end{pmatrix}$$

$$y_t = \frac{\begin{pmatrix} 0 \\ 0 \\ 1 \end{pmatrix} \wedge u_t}{\left\| \begin{pmatrix} 0 \\ 0 \\ 1 \end{pmatrix} \wedge u_t \right\|} = \frac{1}{|\cos(D_L)|} \begin{pmatrix} -\cos(D_L)\sin(D_G) \\ \cos(D_L)\cos(D_G) \\ 0 \end{pmatrix}$$

$$x_t = u_t \wedge y_t = \frac{1}{|\cos(D_L)|} \begin{pmatrix} -\sin(D_L)\cos(D_L)\cos(D_G) \\ -\sin(D_L)\cos(D_L)\sin(D_G) \\ (\cos(D_L))^2 \end{pmatrix}$$

- calcul de la matrice de passage du repère de la caméra au repère terrestre centré :

$$MP_{C \to RTC} = MP_{RTL \to RTC} \cdot MP_{A \to RTL} \cdot MP_{C \to A}$$

- détermination de la ligne de visée ($W_x$, $W_y$, $W_z$) dans le repère terrestre centré.

  Vecteur associé à la ligne de visée dans le repère terrestre centré :

$$W_x = MP_{C \to RTC} \cdot V_x$$

  Vecteur associé à la 1ère normale à la ligne de visée vers le point d'aboutissement :

$$W_y = MP_{C \to RTC} \cdot V_y$$

  Vecteur associé à la 2ème normale à la ligne de visée vers le point d'aboutissement :

$$W_z = MP_{C \to RTC} \cdot V_z$$

La première étape de détermination de position E4 peut ensuite comprendre une étape de calcul de position E42 au cours de laquelle :

- sont déterminées les équations :

  ∘ du plan ayant pour normale $u_t$ tangent au point résultant de la projection du point d'aboutissement à l'altitude de l'aéronef,
  ∘ du plan engendré par ($W_x$, $W_z$), de normale $W_y$ et passant par ($D_L$, $D_G$, $D_Z$).
  ∘ du plan engendré par ($W_x$, $W_y$), de normale $W_z$ et passant par ($D_L$, $D_G$, $D_Z$).

- les coordonnées de l'aéronef sont déterminées dans le repère terrestre centré.

Elles correspondent au point d'intersection de ces trois plans :

La solution X est obtenue en résolvant le système linéaire MX = A lorsque $\quad u_t^T W_x < 0, \quad$ avec :

$$M = \begin{pmatrix} u_t^T \\ W_y^T \\ W_z^T \end{pmatrix}$$

$$A = (R_T + A_z) \begin{pmatrix} u_t^T u_t \\ u_t^T W_y \\ u_t^T W_z \end{pmatrix}$$

La solution du système linéaire ci-dessus est : : $X = \begin{pmatrix} x_1 \\ x_2 \\ x_3 \end{pmatrix} = M^{-1} A$

La latitude et la longitude sont alors données par :

$$L = \sin^{-1}\left(\frac{x_3}{\|X\|}\right)$$

$$G = \arg(x_1 + ix_2)$$

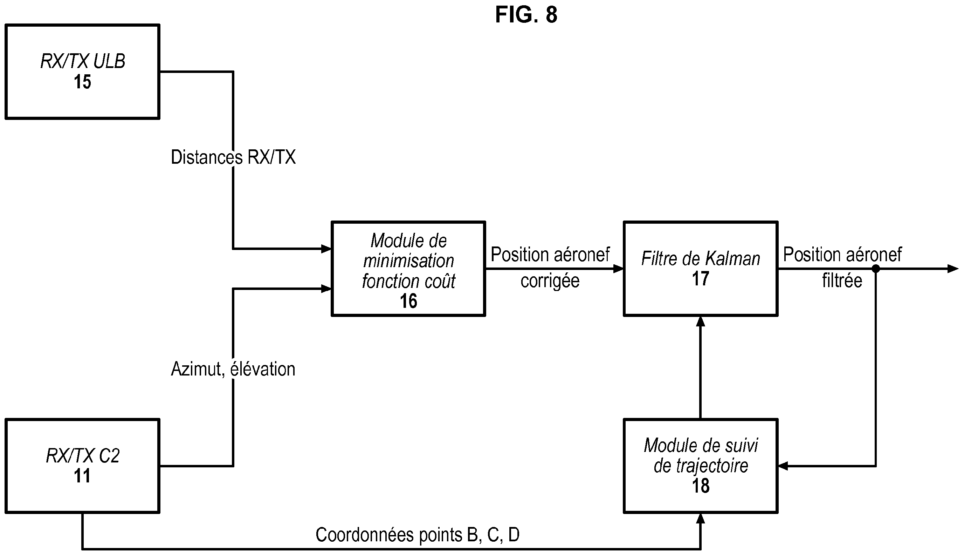

Dans un deuxième mode de réalisation, représenté en figure 5 et en **figure 8,** la phase d'assistance à l'atterrissage P2, au cours de laquelle l'aéronef est guidé du point d'accroche C au point d'aboutissement D, peut exploiter des données de distance entre un émetteur-récepteur embarqué sur l'aéronef et au moins trois émetteurs-récepteurs au sol. Pour cela, la phase d'assistance à l'atterrissage P2 peut comprendre une deuxième étape de détermination de position E7 au cours de laquelle des données de position de l'aéronef sont estimées à partir de données de distances entre l'émetteur-récepteur embarqué et lesdits au moins trois émetteurs-récepteurs au sol. Comme expliqué ci-dessus, la distance entre chaque émetteur-récepteur au sol et l'émetteur-récepteur embarqué peut être déterminée par l'échange de signaux entre ces émetteurs. Puisque la position des émetteurs-récepteurs au sol est connue, ces informations de distances peuvent être employées pour minimiser l'incertitude sur la position de l'aéronef. Optionnellement, la détermination des données de position de l'aéronef peut également tirer parti de mesures d'azimut et d'élévation transmises par l'écartomètre lorsque de telles mesures sont disponibles.

Pour cela, le calcul des données de position faisant intervenir les mesures transmises par l'écartomètre et les distances entre émetteurs-récepteurs (ER) peut être réalisé par un module de minimisation 16 minimisant une fonction de coût. Une telle fonction de coût peut être une expression mathématique comprenant des termes de puissance d'écart entre une distance mesurée entre l'émetteur-récepteur embarqué et un émetteur-récepteur au sol et une distance correspondante calculée à partir de la position de l'aéronef et de celle de l'émetteur-récepteur au sol, et optionnellement d'écart entre les coordonnées de position réelles de l'aéronef et les coordonnées correspondantes fournies par l'écartomètre. Ces puissances peuvent être choisies arbitrairement ou sélectionnées de manière à moduler ou accentuer l'importance relative des contributions les unes par rapport aux autres. Les coordonnées de position recherchées sont alors les coordonnées choisies comme coordonnées de position réelles minimisant la fonction de coût selon le critère des « moindres puissances ». Un exemple de fonction de coût simple C ne prenant pas en compte la mesure d'élévation fournie par l'écartomètre est fournie ci-dessous. Cette fonction de coût comprend par exemple un terme C1 fonction des données de distance entre l'émetteur-récepteur embarqué et les émetteurs-récepteurs au sol et un terme C2 fonction de la mesure d'azimut fournie par l'écartomètre.

$$C\big(x(t), y(t)\big) = \underbrace{C_1\big(x(t), y(t)\big)}_{ER\ ULB} + \underbrace{C_2\big(x(t), y(t)\big)}_{\text{écartomètre}}$$

La détermination de la position de l'aéronef étant réalisée de manière discrète, on suppose dans cet exemple qu'elle est réalisée de manière périodique avec une période T d'échantillonnage. On se place à l'instant t = kT.

$$C_1\big(x(kT), y(kT)\big)$$
$$= \sum_{m=0}^{k} \sum_{n=1}^{N} w_n(mT) \left( \frac{\sqrt{(x(mT) - x_n)^2 + (y(mT) - y_n)^2} - \sqrt{d_n^2(mT) - A_Z^2(mT)}}{\delta_{maxi}^{ULB}(mT)} \right)^o$$

$$C_2\big(x(kT), y(kT)\big) = \sum_{m=0}^{k} \left( \frac{\big(\theta(mT) - \theta_e(mT)\big)^2}{\sigma_e^2} \right)^q$$

Où:

$(x(mT), y(mT))$ : Position retenue de l'aéronef à l'instant mT.

$\theta(mT)$ : Azimut retenu de l'aéronef par rapport à la direction de référence à l'instant mT.

$\theta_e(mT)$ : Azimut mesuré de l'aéronef par rapport à la direction de référence à l'instant mT.

$\sigma_e$ : Écart type de l'erreur de mesure commise par l'écartomètre

$(x_n, y_n)$ : Position de l'ER ULB au sol d'indice n .

$N$ : Nombre d'ER ULB déployés au sol (N $\geq$ 3).

$d_n(\tau)$ : Mesure de distance entre l'aéronef et l'ER ULB au sol d'indice n à l'instant $\tau$.

$\delta_{maxi}^{ULB}(\tau)$   : Erreur de distance maximale commise lors du processus de mesure de distance.

$W_n(\tau)$ : 1 si la mesure de distance est possible (l'ER au sol est à portée de l'ER embarqué), 0 sinon.

$o,p,q$ : Paramètres optionnels permettant de conformer progressivement la fonction coût à un « puits rectangulaire » (lorsque o, p, q $\rightarrow \infty$).

L'angle $\theta(t)$ est lié aux coordonnées (x(t),y(t)) de la manière suivante :

$$\theta(t) = \text{Re}\big(-i \log\big(x(t) + iy(t)\big)\big)$$

Où Re désigne la partie réelle.

Les termes C1 et C2 donnés en exemple sont respectivement fonctions des données de distance et des mesures d'azimut fournies à plusieurs instants mT avant l'instant kT auquel les données de position corrigées x(t), y(t) sont recherchées. Les mesures de distance $d_n(mT)$, les coordonnées de position $(x(mT),y(mT))$, et les mesures d'azimut $\theta(mT)$, $\theta_e(mT)$ ayant déjà été déterminées ou mesurées pour les instants antérieurs à t=kT, ces termes sont supposés connus pour m<k.

Minimiser c(x(t),y(t)) revient alors à minimiser :

$$\Gamma(k) = \sum_{n=1}^{N} w_n(k) \left( \frac{\sqrt{(x(k) - x_n)^2 + (y(k) - y_n)^2} - \sqrt{d_n^2(k) - A_Z^2(k)}}{\delta_{maxi}^{ULB}(mT)} \right)^o$$

$$+ \left( \frac{\sqrt{\big(x(k) - x_l(k)\big)^2 + \big(y(k) - y_l(k)\big)^2}}{\delta_{maxi}^{Cl}(k)} \right)^p$$

$$+ \left( \frac{\big(\text{Re}\big(-i \log\big(x(k) + iy(k)\big)\big) - \theta_e(k)\big)^2}{\sigma_e^2} \right)^q$$

La solution est obtenue comme présenté ci-dessus en résolvant le système d'équation suivant, par exemple par la méthode de Newton-Raphson :

$$\begin{cases} \dfrac{\partial \Gamma}{\partial x} = f_x = 0 \\ \dfrac{\partial \Gamma}{\partial y} = f_y = 0 \end{cases}$$

Alternativement, l'altitude des émetteurs récepteurs au sol zn peut être prise en compte et la minimisation de la fonction de coût peut être utilisée pour déterminer l'altitude de l'aéronef z(t). La fonction de coût peut alors s'écrire

$$C\big(x(t), y(t), z(t)\big) = \underbrace{C_1\big(x(t), y(t), z(t)\big)}_{ER\ ULB} + \underbrace{C_2\big(x(t), y(t)\big)}_{\text{écartomètre}}$$

Avec

$$C_1\big(x(kT), y(kT)\big) = \sum_{m=0}^{k} \sum_{n=1}^{N} w_n(mT) \left( \frac{\sqrt{(x(mT) - x_n)^2 + (y(mT) - y_n)^2 + (z(mT) - z_n)^2} - d_n(mT)}{\delta_{maxi}^{ULB}(mT)} \right)^o$$

Minimiser C(x(t),y(t), z(t)) revient alors à minimiser :

$$\Gamma(k) = \sum_{n=1}^{N} w_n(k) \left( \frac{\sqrt{(x(k) - x_n)^2 + (y(k) - y_n)^2 + (z(k) - z_n)^2} - d_n(k)}{\delta_{maxi}^{ULB}(k)} \right)^o$$
$$+ \left( \frac{\sqrt{\big(x(k) - x_I(k)\big)^2 + \big(y(k) - y_I(k)\big)^2}}{\delta_{maxi}^{CI}(k)} \right)^p$$
$$+ \left( \frac{\big(\text{Re}\big(-i \log\big(x(k) + iy(k)\big)\big) - \theta_e(k)\big)^2}{\sigma_e^2} \right)^q$$

La solution est obtenue comme présenté ci-dessus en résolvant le système d'équation suivant, par exemple par la méthode de Newton-Raphson :

$$\begin{cases} \dfrac{\partial \Gamma}{\partial x} = f_x = 0 \\ \dfrac{\partial \Gamma}{\partial y} = f_y = 0 \\ \dfrac{\partial \Gamma}{\partial z} = f_z = 0 \end{cases}$$

Les données de position corrigées (x(t), y(t)) obtenues par minimisation de la fonction de coût peuvent être filtrées à l'aide d'un filtre de Kalman 17 afin d'affiner l'estimation de la position de l'aéronef avant d'utiliser cette position pour réaliser le guidage de l'aéronef, et la matrice d'état du filtre peut être adaptée pour prendre en compte le profil de la trajectoire prédéfinie à faire suivre à l'aéronef 18.

Le procédé proposé permet ainsi d'obtenir un guidage de l'aéronef jusqu'au point d'aboutissement et de le faire atterrir, malgré l'indisponibilité du positionnement par satellite.

**Revendications**

1. Procédé d'assistance à l'atterrissage d'un aéronef (1) sur une piste d'atterrissage depuis un point de retour (A) jusqu'à un point d'aboutissement (D) au niveau duquel l'aéronef entre en contact avec la piste d'atterrissage, ledit procédé étant mis en œuvre par un dispositif de traitement de données (2) embarqué sur ledit aéronef (1) et configuré pour être relié à :

   - un altimètre (4) configuré pour mesurer l'altitude de l'aéronef,
   - un écartomètre (13) positionné au niveau d'une station au sol et configuré pour mesurer un écart d'azimut de l'aéronef par rapport à une direction de référence reliant ledit point de retour (A) et la position de l'écartomètre (E),

   ledit procédé étant **caractérisé en ce qu'**il comprend :

   - une phase d'assistance à la navigation retour (P1) comprenant :

      - un guidage de l'aéronef (1), à partir de mesures d'écart d'azimut de l'aéronef par rapport à ladite direction de référence transmises par l'écartomètre, depuis le point de retour (A) en direction de la position de l'écartomètre (E);
      - une détermination du positionnement de l'aéronef à un point de capture prédéterminé (B) aligné avec le point de retour (A) et la position de l'écartomètre (E);
      - un guidage de l'aéronef (1) le long d'une trajectoire prédéfinie depuis le point de capture (B) jusqu'à un point d'accroche (C) prédéterminé aligné avec l'axe de la piste d'atterrissage à partir de données d'altitude fournies par l'altimètre (4) et de données de cap et de vitesse de l'aéronef;
      - une phase d'assistance à l'atterrissage (P2) comprenant un guidage du point d'accroche (C) au point d'aboutissement (D) situé sur la piste d'atterrissage.

2. Procédé d'assistance selon la revendication 1, dans lequel le positionnement de l'aéronef au point de capture (B) est déterminé à partir de données de distance entre l'aéronef (1) et un point de référence au sol aligné avec le point de retour (A) et la position de l'écartomètre (E).

3. Procédé d'assistance selon la revendication 2, dans lequel lesdites données de distance sont estimées à partir de mesures du temps de propagation de paquets de données entre la station au sol et l'aéronef.

4. Procédé d'assistance selon la revendication 3, dans lequel lesdites données de distance sont estimées à partir de mesures du temps de propagation aller de paquets de données entre la station au sol et l'aéronef, ladite station au sol et l'aéronef comprenant des horloges synchronisées.

5. Procédé d'assistance selon la revendication 1, dans lequel la détermination du positionnement de l'aéronef au point de capture (B) comprend l'estimation de données de vitesse dudit aéronef et la détermination d'une distance parcourue par l'aéronef depuis le point de retour (A) à partir desdites données de vitesse.

6. Procédé d'assistance selon la revendication 5, dans lequel le dispositif de traitement de données (2) étant configuré pour être relié en outre à un système optronique (6) comprenant un dispositif de capture d'images (14) embarqué dans l'aéronef (1) et positionné selon l'axe de l'aéronef, ainsi qu'un dispositif de traitement d'image adapté au traitement desdites images, les données de vitesse dudit aéronef (1) sont estimées par ledit système optronique par mesure de vitesse de défilement du sol à l'aide d'images capturées par ledit dispositif de capture d'images et de données d'altitude fournies par l'altimètre (4).

7. Procédé d'assistance selon la revendication 5, dans lequel les données de vitesse dudit aéronef (1) sont estimées par mesure d'un effet doppler engendré par le mouvement de l'aéronef sur des signaux échangés entre l'aéronef et la station au sol.

8. Procédé d'assistance selon l'une des revendications 1 à 7, dans lequel le dispositif de traitement de données (2) étant configuré pour être relié en outre à un dispositif de capture d'images embarqué dans l'aéronef (1), le positionnement de l'aéronef au point de capture (B) est déterminé par la détection d'un amer de position connue dans au moins une image capturée par ledit dispositif de capture d'images.

9. Procédé d'assistance selon l'une des revendications 1 à 8, dans lequel l'aéronef (1) est guidé entre le point de retour (A) et le point de capture (B) selon une trajectoire prédéfinie rectiligne en direction de la position de l'écartomètre (E).

10. Procédé d'assistance selon l'une des revendications 1 à 8, dans lequel l'aéronef (1) est guidé entre le point de retour (A) et le point de capture (B) selon une trajectoire en zigzag ou en paliers.

11. Procédé d'assistance selon l'une quelconque des revendications 1 à 10, dans lequel, le dispositif de traitement de données (2) étant configuré pour être relié en outre à une caméra (10) embarquée dans l'aéronef (1), la phase d'assistance à l'atterrissage (P2) comprend l'estimation (E3) d'une position du point d'aboutissement (D) dans une image de la piste d'atterrissage capturée par la caméra (10) et l'estimation (E4) d'une position de l'aéronef en fonction de ladite position du point d'aboutissement estimée dans l'image et de données d'altitude fournies par l'altimètre (4), et dans lequel ledit guidage de l'aéronef du point d'accroche (C) au point d'aboutissement (D) est réalisé en maintenant l'aéronef aligné avec l'axe de la piste d'atterrissage.

12. Procédé d'assistance selon l'une quelconque des revendications 1 à 11 dans lequel, le dispositif de traitement de données (2) étant en outre configuré pour être relié à un émetteur-récepteur embarqué (15) sur ledit aéronef (1) et destiné à recevoir des signaux émis par au moins trois émetteurs-récepteurs positionnés au sol, la phase d'assistance à l'atterrissage (P2) comprend l'estimation (E7) de données de position de l'aéronef à partir de données de distances entre l'émetteur-récepteur embarqué (15) et lesdits au moins trois émetteurs-récepteurs au sol.

13. Procédé d'assistance selon l'une des revendications 1 à 12, dans lequel l'aéronef (1) est en outre guidé à partir de mesures d'écart d'élévation de l'aéronef par rapport à un plan de référence.

14. Produit programme d'ordinateur comprenant des instructions de code pour l'exécution d'un procédé selon l'une quelconque des revendications 1 à 13 lorsque ce programme est exécuté par un processeur.

15. Dispositif de traitement de données (2) configuré pour être embarqué dans un aéronef (1) et pour être relié à :

- un altimètre (4) configuré pour mesurer l'altitude de l'aéronef,
- un écartomètre (13) positionné au niveau d'une station au sol et configuré pour mesurer un écart d'azimut de l'aéronef par rapport à une direction de référence reliant ledit point de retour (A) et la position de l'écartomètre (E)

le dispositif de traitement de données (2) étant **caractérisé en ce qu'**il est configuré pour la mise en œuvre du procédé d'assistance selon l'une des revendications 1 à 13, ledit procédé d'assistance comprenant :

- une phase d'assistance à la navigation retour (P1) comprenant :

- un guidage de l'aéronef (1), à partir de mesures d'écart d'azimut de l'aéronef par rapport à ladite direction de référence transmises par l'écartomètre, depuis le point de retour (A) en direction de la position de l'écartomètre (E);
- une détermination du positionnement de l'aéronef à un point de capture prédéterminé (B) aligné avec le point de retour (A) et la position de l'écartomètre (E);
- un guidage de l'aéronef (1) le long d'une trajectoire prédéfinie depuis le point de capture (B) jusqu'à un point d'accroche (C) prédéterminé aligné avec l'axe de la piste d'atterrissage à partir de données d'altitude fournies par l'altimètre (4) et de données de cap et de vitesse de l'aéronef;
- une phase d'assistance à l'atterrissage (P2) comprenant un guidage du point d'accroche (C) au point d'aboutissement (D) situé sur la piste d'atterrissage.

16. Système d'assistance automatique à l'atterrissage (3) d'un aéronef (1) sur une piste d'atterrissage depuis un point de retour (A) jusqu'à un point d'aboutissement (D) au niveau duquel l'aéronef entre en contact avec la piste d'atterrissage comprenant :

- un altimètre (4) configuré pour mesurer l'altitude de l'aéronef,
- un écartomètre (13) positionné au niveau d'une station au sol et configuré pour mesurer un écart d'azimut de l'aéronef par rapport à une direction de référence reliant ledit point de retour (A) et la position de l'écartomètre (E),
- le dispositif de traitement de données (2) selon la revendication 15.

**Patentansprüche**

1. Verfahren zur Unterstützung der Landung eines Luftfahrzeugs (1) auf einer Landebahn ausgehend von einem Umkehrpunkt (A) bis zu einem Endpunkt (D), in dessen Bereich das Luftfahrzeug mit der Landebahn in Berührung gelangt,
   wobei das Verfahren durch eine Datenverarbeitungsvorrichtung (2) durchgeführt wird, die sich an Bord des Luftfahrzeugs (1) befindet und ausgestaltet ist, um verbunden zu sein mit:

   - einem Höhenmesser (4), der ausgestaltet ist, um die Höhe des Luftfahrzeugs zu messen,
   - einem Abweichungsmesser (13), der im Bereich einer Bodenstation positioniert ist und ausgestaltet ist, um eine Azimutabweichung des Luftfahrzeugs in Bezug auf eine Bezugsrichtung zu messen, die den Umkehrpunkt (A) und die Position des Abweichungsmessers (E) verbindet,

   wobei das Verfahren **dadurch gekennzeichnet ist, dass** es umfasst:

   - eine Phase zur Unterstützung der Umkehrnavigation (P1), die umfasst:

     - ein Leiten des Luftfahrzeugs (1) ausgehend von Azimutabweichungsmessungen des Luftfahrzeugs in Bezug auf die Bezugsrichtung, die von dem Abweichungsmesser übertragen werden, ausgehend von dem Umkehrpunkt (A) in Richtung der Position des Abweichungsmessers (E);
     - eine Bestimmung der Positionierung des Luftfahrzeugs an einem vorbestimmten Erfassungspunkt (B), der auf den Umkehrpunkt (A) und die Position des Abweichungsmessers (E) ausgerichtet ist;
     - eine Leitung des Luftfahrzeugs (1) entlang der vordefinierten Flugbahn ausgehend von dem Erfassungspunkt (B) bis zu einem vorbestimmten Aufhängepunkt (C), der auf die Achse der Landebahn ausgerichtet ist, ausgehend von durch den Höhenmesser (4) gelieferten Höhendaten und Kurs- und Geschwindigkeitsdaten des Luftfahrzeugs;
     - eine Phase zur Unterstützung der Landung (P2), die ein Leiten vom Aufhängepunkt (C) bis zum Endpunkt (D) umfasst, der sich auf der Landebahn befindet.

2. Unterstützungsverfahren nach Anspruch 1, wobei die Positionierung des Luftfahrzeugs am Erfassungspunkt (B) ausgehend von Daten des Abstands zwischen dem Luftfahrzeug (1) und einem Bezugspunkt am Boden bestimmt wird, der mit dem Umkehrpunkt (A) und der Position des Abweichungsmessers (E) ausgerichtet ist.

3. Unterstützungsverfahren nach Anspruch 2, wobei die Abstandsdaten ausgehend von Ausbreitungszeitmessungen von Datenpaketen zwischen der Bodenstation und dem Luftfahrzeug geschätzt werden.

4. Unterstützungsverfahren nach Anspruch 3, wobei die Abstandsdaten ausgehend von Messungen der Hinweg-Ausbreitungszeit von Datenpaketen zwischen der Bodenstation und dem Luftfahrzeug geschätzt werden, wobei die Bodenstation und das Luftfahrzeug synchronisierte Taktgeber umfassen.

5. Unterstützungsverfahren nach Anspruch 1, wobei die Bestimmung der Positionierung des Luftfahrzeugs am Erfassungspunkt (B) die Schätzung von Geschwindigkeitsdaten des Luftfahrzeugs und die Bestimmung einer durch das Luftfahrzeug ab dem Umkehrpunkt (A) zurückgelegten Distanz ausgehend von den Geschwindigkeitsdaten umfasst.

6. Unterstützungsverfahren nach Anspruch 5, wobei die Datenverarbeitungsvorrichtung (2) ausgestaltet ist, um ferner mit einem optoelektronischen System (6) verbunden zu sein, das eine Bilderfassungsvorrichtung (14) an Bord des Luftfahrzeugs (1), die entlang der Achse des Luftfahrzeugs positioniert ist, sowie eine Bildverarbeitungsvorrichtung umfasst, die für die Verarbeitung der Bilder gestaltet ist, wobei die Geschwindigkeitsdaten des Luftfahrzeugs (1) durch das optoelektronische System durch Messung der Bodengeschwindigkeit mittels durch die Bilderfassungsvorrichtung erfassten Bildern und durch den Höhenmesser (4) gelieferten Höhendaten geschätzt werden.

7. Unterstützungsverfahren nach Anspruch 5, wobei die Geschwindigkeitsdaten des Luftfahrzeugs (1) durch Messung eines durch die Bewegung des Luftfahrzeugs verursachten Doppler-Effekts auf zwischen dem Luftfahrzeug und der Bodenstation ausgetauschten Signalen geschätzt werden.

8. Unterstützungsverfahren nach einem der Ansprüche 1 bis 7, wobei die Datenverarbeitungsvorrichtung (2) ausgestaltet ist, um ferner mit einer Bilderfassungsvorrichtung an Bord des Luftfahrzeugs (1) verbunden zu sein, wobei die Positionierung des Luftfahrzeugs am Erfassungspunkt (B) durch die Feststellung einer bekannten Positionsmarke in mindestens einem durch die Bilderfassungsvorrichtung erfassten Bild bestimmt wird.

9. Unterstützungsverfahren nach einem der Ansprüche 1 bis 8, wobei das Luftfahrzeug (1) zwischen dem Umkehrpunkt (A) und dem Erfassungspunkt (B) entlang einer geradlinigen vordefinierten Flugbahn in Richtung der Position des Abweichungsmessers (E) geleitet wird.

10. Unterstützungsverfahren nach einem der Ansprüche 1 bis 8, wobei das Flugzeug (1) zwischen dem Umkehrpunkt (A) und dem Erfassungspunkt (B) entlang einer zickzack- oder stufenförmigen Flugbahn geleitet wird.

11. Unterstützungsverfahren nach einem der Ansprüche 1 bis 10, wobei die Datenverarbeitungsvorrichtung (2) ausgestaltet ist, um ferner mit einer Kamera (10) an Bord des Luftfahrzeugs (1) verbunden zu sein, wobei die Landeunterstützungsphase (P2) die Schätzung (E3) einer Position des Endpunkts (D) in einem durch die Kamera (10) erfassten Bild der Landebahn und die Schätzung (E4) einer Position des Luftfahrzeugs in Abhängigkeit von der Position des in dem Bild geschätzten Endpunkts und durch den Höhenmesser (4) gelieferten Höhendaten umfasst, und wobei das Leiten des Luftfahrzeugs vom Aufhängepunkt (C) zum Endpunkt (D) unter Beibehaltung der Ausrichtung des Luftfahrzeugs mit der Achse der Landebahn ausgeführt wird.

12. Unterstützungsverfahren nach einem der Ansprüche 1 bis 11, wobei die Datenverarbeitungsvorrichtung (2) ferner ausgestaltet ist, um mit einem Sendeempfänger (15) an Bord des Luftfahrzeugs (1) verbunden zu sein, und dazu bestimmt ist, Signale zu empfangen, die von mindestens drei am Boden positionierten Sendeempfängern gesendet werden, wobei die Landeunterstützungshase (P2) die Schätzung (E7) von Positionsdaten des Luftfahrzeugs ausgehend von Daten von Abständen zwischen dem Sendeempfänger (15) an Bord und den mindestens drei Sendeempfängern am Boden umfasst.

13. Unterstützungsverfahren nach einem der Ansprüche 1 bis 12, wobei das Luftfahrzeug (1) ferner ausgehend von Messungen der Höhenabweichung des Luftfahrzeugs in Bezug auf eine Bezugsebene geleitet wird.

14. Computerprogrammprodukt, das Codebefehle für die Ausführung eines Verfahrens nach einem der Ansprüche 1 bis 13 umfasst, wenn dieses Programm durch einen Prozessor ausgeführt wird.

15. Datenverarbeitungsvorrichtung (2), die ausgestaltet ist, um sich an Bord eines Luftfahrzeugs (1) zu befinden und um verbunden zu sein mit:

- einem Höhenmesser (4), der ausgestaltet ist, um die Höhe des Luftfahrzeugs zu messen,
- einem Abweichungsmesser (13), der im Bereich einer Bodenstation positioniert ist und ausgestaltet ist, um eine Azimutabweichung des Luftfahrzeugs in Bezug auf eine Bezugsrichtung zu messen, die den Umkehrpunkt (A) und die Position des Abweichungsmessers (E) verbindet,

wobei die Datenverarbeitungsvorrichtung (2) **dadurch gekennzeichnet ist, dass** sie für die Durchführung des Unterstützungsverfahrens nach einem der Ansprüche 1 bis 13 ausgestaltet ist, wobei das Unterstützungsverfahren umfasst:

- eine Phase der Unterstützung der Umkehrnavigation (P1), die umfasst:

- ein Leiten des Luftfahrzeugs (1) ausgehend von Messungen der Azimutabweichung des Luftfahrzeugs in Bezug auf die Bezugsrichtung, die von dem Abweichungsmesser gesendet werden, ausgehend von dem Umkehrpunkt (A) in Richtung der Position des Abweichungsmessers (E);
- eine Bestimmung der Positionierung des Luftfahrzeugs an einem vorbestimmten Erfassungspunkt (B), der auf den Umkehrpunkt (A) und die Position des Abweichungsmessers (E) ausgerichtet ist;
- ein Leiten des Luftfahrzeugs (1) entlang einer vordefinierten Flugbahn ausgehend vom Erfassungspunkt (B) bis zu einem vorbestimmten Aufhängepunkt (C), der mit der Achse der Landebahn ausgerichtet ist, ausgehend von durch den Höhenmesser (4) gelieferten Höhendaten und Kurs- und Geschwindigkeitsdaten des Luftfahrzeugs;
- eine Landungsunterstützungsphase (P2), die ein Leiten vom Aufhängepunkt (C) bis zum Endpunkt (D) umfasst, der sich auf der Landebahn befindet.

16. System zur automatischen Unterstützung der Landung (3) eines Luftfahrzeugs (1) auf einer Landebahn ausgehend von einem Umkehrpunkt (A) bis zu einem Endpunkt (D), in dessen Bereich das Luftfahrzeug mit der Landebahn in Kontakt gelangt, das umfasst:

- einen Höhenmesser (4), der ausgestaltet ist, um die Höhe des Luftfahrzeugs zu messen,
- einen Abweichungsmesser (13), der im Bereich einer Bodenstation positioniert ist und ausgestaltet ist, um die Azimutabweichung des Luftfahrzeugs in Bezug auf eine Bezugsrichtung zu messen, die den Umkehrpunkt (A) mit der Position des Abweichungsmessers (E) verbindet,
- die Datenverarbeitungsvorrichtung (2) nach Anspruch 15.

**Claims**

1. A method for assisting landing of an aircraft (1) on a landing runway from a return point (A) to an end point (D) at which the aircraft comes into contact with the landing runway,
   said method being implemented by a data processing device (2) onboard said aircraft (1) and configured to be connected to:

   - an altimeter (4) configured to measure the altitude of the aircraft,
   - a deviation meter (13) positioned at a ground station and configured to measure an azimuth deviation of the aircraft relative to a reference direction connecting said return point (A) and the position of the deviation meter (E),

   said method being **characterized in that** it comprises:

   - a return navigation assistance phase (P1) comprising:

        - a guidance for the aircraft (1), based on measurements of the azimuth deviation of the aircraft relative to said reference direction transmitted by the deviation meter, from the return point (A) in the direction of the position of the deviation meter (E);
        - a determination of the positioning of the aircraft at a predetermined capture point (B) aligned with the return point (A) and the position of the deviation meter (E);
        - a guidance for the aircraft (1) along a predefined path from the capture point (B) to a holding point (C) aligned with the centerline of the landing runway based on altitude data provided by the altimeter (4) and on heading and speed data of the aircraft;
        - a landing assistance phase (P2) comprising a guidance from the holding point (C) to the end point (D) located on the landing runway.

2. The assistance method according to claim 1, wherein the positioning of the aircraft at the capture point (B) is determined based on distance data between the aircraft (1) and a ground reference point aligned with the return point (A) and the position of the deviation meter (E).

3. The assistance method according to claim 2, wherein said distance data are estimated based on measurements of the data packet propagation time between the ground station and the aircraft.

4. The assistance method according to claim 3, wherein said distance data are estimated based on measurements of the one-way data packet propagation time between the ground station and the aircraft, said ground station and the aircraft comprising synchronized clocks.

5. The assistance method according to claim 1, wherein the determination of the positioning of the aircraft at the capture point (B) comprises the estimation of speed data of said aircraft and the determination of a distance traveled by the aircraft from the return point (A) based on said speed data.

6. The assistance method according to claim 5, wherein the data processing device (2), being configured to be further connected to an optronic system (6) comprising an image capture device (14) onboard the aircraft (1) and positioned along the centerline of the aircraft, as well as an image processing device adapted to the processing of said images, the speed data of said aircraft (1) are estimated by said optronic system by measuring the ground running speed using images captured by said image capture device and altitude data provided by the altimeter (4).

7. The assistance method according to claim 5, wherein the speed data of said aircraft (1) are estimated by measuring a Doppler effect generated by the movement of the aircraft on signals exchanged between the aircraft and the ground station.

8. The assistance method according to any of claims 1 to 7, wherein, the data processing device (2), being configured to be further connected to an image capture device onboard the aircraft (1), the positioning of the aircraft at the capture point (B) is determined by the detection of a known mark position in at least one image captured by said image capture device.

9. The assistance method according to any of claims 1 to 8, wherein the aircraft (1) is guided between the return point (A) and the capture point (B) according to a predefined rectilinear path in the direction of the position of the deviation meter (E).

10. The assistance method according to any of claims 1 to 8, wherein the aircraft (1) is guided between the return point (A) and the capture point (B) according to a zigzag or level path.

11. The assistance method according to any one of claims 1 to 10, wherein, the data processing device (2) being configured to be further connected to a camera (10) onboard the aircraft (1), the landing assistance phase (P2) comprises the estimation (E3) of a position of the end point (D) in an image of the landing runway captured by the camera (10) and the estimation (E4) of a position of the aircraft as a function of said position of the end point estimated in the image and of altitude data provided by the altimeter (4), and wherein said guidance of the aircraft from the holding point (C) to the end point (D) is carried out by maintaining the aircraft aligned with the centerline of the landing runway.

12. The assistance method according to any one of claims 1 to 11 wherein, the data processing device (2) being further configured to be connected to an onboard transceiver (15) on said aircraft (1) and intended to receive signals emitted from at least three ground-based transceivers, the landing assistance phase (P2) comprises the estimation (E7) of position data of the aircraft based on distance data between the onboard transceiver (15) and said at least three ground-based transceivers.

13. The assistance method according to any of claims 1 to 12, wherein the aircraft (1) is further guided based on measurements of the elevation deviation of the aircraft relative to a reference plane.

14. A computer program product comprising code instructions for the execution of a method according to any one of claims 1 to 13 when this program is executed by a processor.

15. A data processing device (2) configured to be onboard an aircraft (1) and to be connected to:

   - an altimeter (4) configured to measure the altitude of the aircraft,
   - a deviation meter (13) positioned at a ground station and configured to measure an azimuth deviation of the aircraft relative to a reference direction connecting said return point (A) and the position of the deviation meter (E)

   the data processing device (2) being **characterized in that** it is configured for the implementation of the assistance method according to any of claims 1 to 13, said assistance method comprising:

   - a return navigation assistance phase (P1) comprising:

      - a guidance for the aircraft (1), based on measurements of the azimuth deviation of the aircraft relative to said reference direction transmitted by the deviation meter, from the return point (A) in the direction of the position of the deviation meter (E);
      - a determination of the positioning of the aircraft at a predetermined capture point (B) aligned with the return point (A) and the position of the deviation meter (E);
      - a guidance for the aircraft (1) along a predefined path from the capture point (B) to a predetermined holding point (C) aligned with the centerline of the landing runway based on altitude data provided by the altimeter (4) and on heading and speed data of the aircraft;
      - a landing assistance phase (P2) comprising a guidance from the holding point (C) to the end point (D) located on the landing runway.

16. A system (3) for automatically assisting the landing of an aircraft (1) on a landing runway from a return point (A) to an end point (D) at which the aircraft comes into contact with the landing runway comprising:

- an altimeter (4) configured to measure the altitude of the aircraft,
- a deviation meter (13) positioned at a ground station and configured to measure an azimuth deviation of the aircraft relative to a reference direction connecting said return point (A) and the position of the deviation meter (E),
- the data processing device (2) according to claim 15.

# FIG. 1

# FIG. 2

Aéronef 1

Système d'assistance à l'atterrissage 3

Système optronique 6

RX/TX C2 11

Caméra 10

Dispositif de capture d'image 14

Dispositif de traitement d'image 19

Commandes, coordonnées, distances

Dispositif de traitement de données 2

Vitesses et positions angulaires

Module d'estimation de distance 5

Système de contrôle de vol 7

Gouvernes 8

Gaz 9

Altimètre 4

Altitude

EP 3 323 028 B1

FIG. 3

Lien Mission M 12

Lien Contrôle/Commande C2 11

Ecartomètre 13

**FIG. 4**

EP 3 323 028 B1

## FIG. 5

E1 — **Phase d'assistance à la navigation retour**
Guidage A→B, détermination aéronef en B — P1

E2 — Guidage B → C

**Phase d'assistance à l'atterrissage**

E3 — Traitement d'image -
Estimation position D dans images

Estimation position
corrigée de l'aéronef — E7

**Estimation position de l'aéronef**

E4 — Calcul de ligne de visée — E41

Calcul de position — E42

P2

Filtrage — E5

Guidage C→D — E6

FIG. 6

Caméra
**10**

RX/TX C2
**11**

Positionnement réticule
par l'opérateur

Traitement d'image -
estimation position D
dans images
**E3**

Coordonnées D

Position D dans image

Estimation position
de l'aéronef
**E4**

Altitude

Altimètre
**4**

Position aéronef estimée (grossière)

Filtre de Kalman
**E5**

Position aéronef filtrée (fine)

## FIG. 7

**FIG. 8**

EP 3 323 028 B1

**EP 3 323 028 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4454510 A
- US 2009055038 A
- GB 2302318 A